(19)

Europäisches
Patentamt
European
Patent Office
Office européen
des brevets

(11) **EP 3 913 557 A1**

(12) **EUROPEAN PATENT APPLICATION**

(43) Date of publication:
**24.11.2021  Bulletin 2021/47**

(51) Int Cl.:
**G06Q 10/06** *(2012.01)*       **G06Q 10/00** *(2012.01)*

(21) Application number: **21164860.5**

(22) Date of filing: **25.03.2021**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **20.05.2020   JP 2020088069**

(71) Applicant: **FUJITSU LIMITED
Kanagawa 211-8588 (JP)**

(72) Inventor: **Fujita, Hiroshi
Tokyo, 113-6591 (JP)**

(74) Representative: **Hoffmann Eitle
Patent- und Rechtsanwälte PartmbB
Arabellastraße 30
81925 München (DE)**

(54) **FUTURE QUALITY OF SERVICE DETERMINATION METHOD AND DETERMINATION PROGRAM**

(57)     A determination method executed by a computer, the method includes acquiring service usage and resource usage related to a predetermined service; acquiring a quality value of the predetermined service by using the resource usage and the service usage; identifying the resource usage in future by using a first model and the resource usage, the first model outputting a usage amount of a resource at any time point in future; identifying the resource usage in future by using a second model and the service usage, the second model outputting a use amount of a service at any time point in future; and determining whether to output an alarm related to the predetermined service based on the quality value, the resource usage in future, and the resource usage in future.

FIG. 1

**Description**

FIELD

The embodiments discussed herein are related to a determination method and a determination program.

BACKGROUND

In the related art, a service may be provided by using one or more resources included in a system. There is a service administrator who manages a service and detects that quality of the service is degraded. There is a system administrator who manages the system, specifies any resource causing the degradation in service quality, and handles the specified resource.

In the related art, for example, a correspondence relationship between loads of a plurality of network devices and quality of service is learned, and control contents of each network device are determined based on the learned correspondence relationship so that the quality of service is equal to or higher than a predetermined control change reference value. Japanese Laid-open Patent Publication No. 2012-100010 and the like are disclosed as the related art.

SUMMARY

[TECHNICAL PROBLEM]

Meanwhile, in the related art, a system administrator may not specify any resource causing degradation in service quality and handle the specified resource until after the service quality is degraded. For example, the system administrator may not specify any resource causing the degradation in service quality and handle the specified resource until the system administrator is notified of the degradation in service quality by a service administrator.

[SOLUTION TO PROBLEM]

According to an aspect of the embodiments, a determination method executed by a computer, the method includes acquiring service usage and resource usage related to a predetermined service; acquiring a quality value of the predetermined service by using the resource usage and the service usage; identifying the resource usage in future by using a first model and the resource usage, the first model outputting a usage amount of a resource at any time point in future; identifying the resource usage in future by using a second model and the service usage, the second model outputting a use amount of a service at any time point in future; and determining whether to output an alarm related to the predetermined service based on the quality value, the resource usage in future, and the resource usage in future.

BRIEF DESCRIPTION OF DRAWINGS

FIG. 1 is an explanatory diagram illustrating an example of a determination method according to an embodiment;
FIG. 2 is an explanatory diagram illustrating an example of a business processing system;
FIG. 3 is a block diagram illustrating a hardware configuration example of a determination apparatus;
FIG. 4 is an explanatory diagram illustrating an example of storage contents in an operation table;
FIG. 5 is an explanatory diagram illustrating an example of storage contents in a daily table;
FIG. 6 is an explanatory diagram illustrating an example of storage contents in a vector table;
FIG. 7 is an explanatory diagram illustrating an example of storage contents in a component table;
FIG. 8 is an explanatory diagram illustrating an example of storage contents in a weight table;
FIG. 9 is an explanatory diagram illustrating an example of storage contents in a service use amount table;
FIG. 10 is an explanatory diagram illustrating an example of storage contents in a service quality table;
FIG. 11 is a block diagram illustrating a hardware configuration example of an administrator-side apparatus;
FIG. 12 is a block diagram illustrating a functional configuration example of the determination apparatus;
FIG. 13 is a block diagram illustrating a specific functional configuration example of the determination apparatus;
FIG. 14 is an explanatory diagram (part 1) illustrating an example in which the determination apparatus determines whether or not an alarm is to be output;
FIG. 15 is an explanatory diagram (part 2) illustrating an example in which the determination apparatus determines whether or not the alarm is to be output;
FIG. 16 is an explanatory diagram (part 3) illustrating an example in which the determination apparatus determines whether or not the alarm is to be output;

FIG. 17 is an explanatory diagram (part 4) illustrating an example in which the determination apparatus determines whether or not the alarm is to be output;

FIG. 18 is an explanatory diagram (part 5) illustrating an example in which the determination apparatus determines whether or not the alarm is to be output;

FIG. 19 is an explanatory diagram (part 6) illustrating an example in which the determination apparatus determines whether or not the alarm is to be output;

FIG. 20 is an explanatory diagram (part 7) illustrating an example in which the determination apparatus determines whether or not the alarm is to be output;

FIG. 21 is an explanatory diagram (part 1) illustrating an example in which the determination apparatus calculates a weighting coefficient;

FIG. 22 is an explanatory diagram (part 2) illustrating an example in which the determination apparatus calculates the weighting coefficient;

FIG. 23 is an explanatory diagram (part 3) illustrating an example in which the determination apparatus calculates the weighting coefficient;

FIG. 24 is an explanatory diagram (part 4) illustrating an example in which the determination apparatus calculates the weighting coefficient;

FIG. 25 is an explanatory diagram (part 5) illustrating an example in which the determination apparatus calculates the weighting coefficient;

FIG. 26 is a flowchart illustrating an example of an entire process procedure;

FIG. 27 is a flowchart illustrating an example of a model generation process procedure; and

FIG. 28 is a flowchart illustrating an example of an analysis process procedure.

[ADVANTAGEOUS EFFECTS OF INVENTION]

In one aspect, it is possible to enable to recognize the quality of service will be degraded in future.

DESCRIPTION OF EMBODIMENTS

Hereinafter, a determination method and a storage medium according to embodiments are described in detail with reference to the drawings.

(Example of Determination Method According to Embodiment)

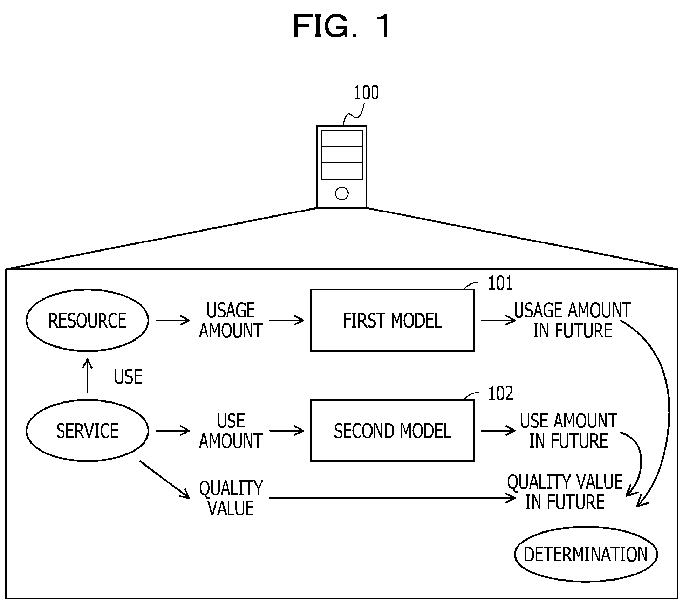

FIG. 1 is an explanatory diagram illustrating an example of a determination method according to an embodiment. A determination apparatus 100 is a computer that enables a user to recognize that quality of a service will be degraded in future. For example, a service is provided by using one or more resources included in a predetermined business processing system formed by one or more devices. There may be a plurality of services.

The business processing system is, for example, an information and communication technology (ICT) system. The devices are, for example, ICT devices. The devices are, for example, servers. The resources are, for example, central processing units (CPUs), memory, communication bandwidths, and the like. The service is realized, for example, by executing one or more processes in one or more devices.

There is a service administrator who manages a service for a business processing system and detects that quality of the service is degraded. For the business processing system, there is a system administrator who manages the business processing system, specifies any resource causing the degradation in service quality, and handles the specified resource. The service administrator and the system administrator may be the same person or different persons.

Meanwhile, in the related art, a system administrator may not specify any resource causing degradation in service quality and handle the specified resource until after the service quality is degraded. This leads to an increase in a time from the degradation of the service quality to recovery of the service quality, and there is a problem that convenience of the service is lowered. There is a problem in that the service administrator may execute an operation of serving a service user and an operation load on the service administrator is increased when the quality of the service is degraded.

For example, when the system administrator is a person different from the service administrator, the system administrator may not obtain a trigger to start an operation of handling any one of the resources until the system administrator is notified by the service administrator that the quality of the service is degraded. For this reason, the system administrator may not start an operation of specifying any resource causing the degradation in service quality and handling the specified resource until the system administrator is notified of the degradation in service quality by the service administrator.

It is considered that the system administrator collates data of an operation status of the service and data of a usage status of the resource in order to specify the resource causing the degradation in quality of the service. For example, the system administrator acquires the data of the operation status of the service from the service administrator. For example, the system administrator collates the data on the operation status of the service and the data on the usage status of the resources, specifies a usage status of the resource for each service, and specifies a resource causing the degradation in the quality of the service. Therefore, there is a problem that the operation load on the system administrator is increased.

Therefore, when the system administrator may recognize that the quality of the service may be degraded in future, it is considered that it is possible to suppress a decrease in convenience of the service, to suppress an increase in operation load on the service administrator, and to suppress an increase in operation load on the system administrator.

Therefore, in the present embodiment, a determination method capable of recognizing that quality of a service will be degraded in future will be described.

In the example in FIG. 1, the determination apparatus 100 includes a first model 101. The first model 101 is a model that outputs the usage amount of resource at any time point in future predicted from input usage amounts of resource at one or more time points. The usage amount of resource is, for example, at least one of a CPU use rate of a physical machine, an available memory amount of physical machine, a network speed of the physical machine, a CPU use rate of a virtual machine, an available memory amount of virtual machine, and a network speed of the virtual machine.

In the example in FIG. 1, the determination apparatus 100 includes a second model 102. The second model 102 is a model that outputs the use amount of service at any time point in future predicted from input use amounts of service at one or more time points. The use amount of service is, for example, an operation rate of the service per unit time. For example, the use amount of service is the number of accesses to the service per unit time.

(1-1) The determination apparatus 100 acquires usage amounts of resource related to a service at one or more time points. The resource related to the service is, for example, a resource used when the service is realized.

(1-2) The determination apparatus 100 acquires use amounts of service at one or more time points. The time point related to the acquired use amount of service may be, for example, the same time point as a time point related to the acquired usage amount of resource. The time point related to the use amount of service indicates when the use amount of service is. The time point related to the use amount of service is, for example, a time point at which the use amount of service is acquired or a time point at which the use amount of service is measured. The time point related to the usage amount of resource indicates when the usage amount of resource is. The time point related to the usage amount of resource is, for example, a time point at which the usage amount of resource is acquired or a time point at which the usage amount of resource is measured. The time point related to the acquired use amount of service may be, for example, a time point different from the time point related to the acquired usage amount of resource.

(1-3) The determination apparatus 100 acquires a quality value of a service associated with the usage amount of resource and the use amount of service in at least one past time point. The quality value of the service is, for example, an index value that increases as quality improves. The quality value of the service is calculated based on, for example, a delay time to a request, a throughput per unit time, a packet loss rate per unit time, and the like. For example, the service quality value is calculated to increase as the delay time to the request decreases.

The time point related to the acquired quality value of the service associated with the usage amount of resource and the use amount of service may be, for example, the same time point as a time point related to the acquired usage amount of resource or the time point related to the acquired use amount of service. The time point related to the quality value of the service indicates when the quality value of the service is. The time point related to the quality value of the service is, for example, a time point at which the quality value of the service is acquired or a time point at which the quality value of the service is measured. The time point related to the acquired quality value of the service associated with the usage amount of resource and the use amount of service may be, for example, a time point different from the time point related to the acquired usage amount of resource or the time point related to the acquired use amount of service.

(1-4) The determination apparatus 100 uses the first model 101 to specify a usage amount of resource at any time point in future predicted from the acquired usage amounts of resource at one or more time points. For example, the determination apparatus 100 inputs the acquired usage amounts of resource at one or more time points to the first model 101 to specify a usage amount of resource at any time point in future.

(1-5) The determination apparatus 100 uses the second model 102 to specify a use amount of service at any time point in future predicted from the acquired use amounts of service at one or more time points. For example, the determination apparatus 100 inputs the acquired use amounts of service at one or more time points to the second model 102 to specify a use amount of service at any time point in future.

A time point related to the use amount of specified service may be, for example, the same time point as a time point related to the usage amount of specified resource. The time point related to the use amount of specified service is, for example, different from the time point related to the usage amount of specified resource, and may be a time point corresponding to the time point related to the usage amount of specified resource. The time point corresponding to a certain time point is, for example, a time point at which a difference from the time point is equal to or less than a certain time.

(1-6) The determination apparatus 100 determines, based on the acquired quality value of the service, the usage amount of specified resource, and the use amount of specified service, whether or not to output an alarm related to the service. For example, when there is a quality value associated with a combination of a usage amount approximated to the usage amount of specified resource and a use amount approximated to the use amount of specified service among the acquired quality values of the service, the determination apparatus 100 specifies the quality value as a quality value at any time point in future.

For example, when it is determined that the specified quality value is less than a threshold value and quality of the service is less than a certain level, the determination apparatus 100 determines to output an alarm related to the service. On the other hand, for example, when the specified quality value is equal to or higher than the threshold value and the quality of the service is equal to or higher than the certain level, the determination apparatus 100 determines not to output the alarm related to the service.

Thus, the determination apparatus 100 enables the system administrator to recognize whether or not the quality of the service is to be degraded in future. Therefore, before the quality of the service is degraded, the system administrator may specify any resource causing the degradation in the quality of the service and start an operation for handling the specified resource.

As a result, the system administrator may reduce a time for the service quality to recover after the service quality is degraded. In some cases, the system administrator may avoid the degradation in the quality of the service. The system administrator may avoid or suppress the degradation in convenience of the service. The system administrator may reduce an operation load on the service administrator. The determination apparatus 100 may reduce the operation load on the system administrator.

(Example of Business Processing System 200)

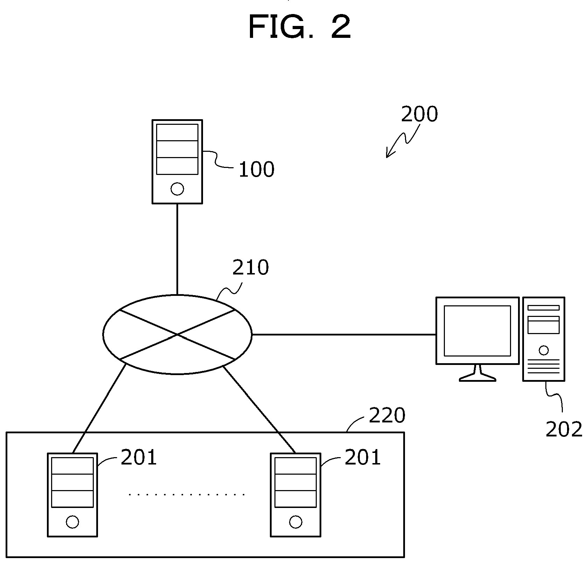

Next, with reference to FIG. 2, an example of a business processing system 200 to which the determination apparatus 100 illustrated in FIG. 1 is applied will be described.

FIG. 2 is an explanatory diagram illustrating an example of the business processing system 200. In FIG. 2, the business processing system 200 includes the determination apparatus 100, one or more business processing apparatuses 201, and one or more administrator-side apparatuses 202.

In the business processing system 200, the determination apparatus 100 and the business processing apparatuses 201 are coupled to one another via a wired or wireless network 210. The network 210 is, for example, a local area network (LAN), a wide area network (WAN), the Internet, or the like. In the business processing system 200, the determination apparatus 100 and the administrator-side apparatus 202 are coupled to each other via the wired or wireless network 210.

The determination apparatus 100 recognizably outputs that a quality of a service will be degraded in future. For example, when it is determined that the quality of the service is degraded in future, the determination apparatus 100 outputs an alarm related to the service. An output destination is, for example, the administrator-side apparatus 202.

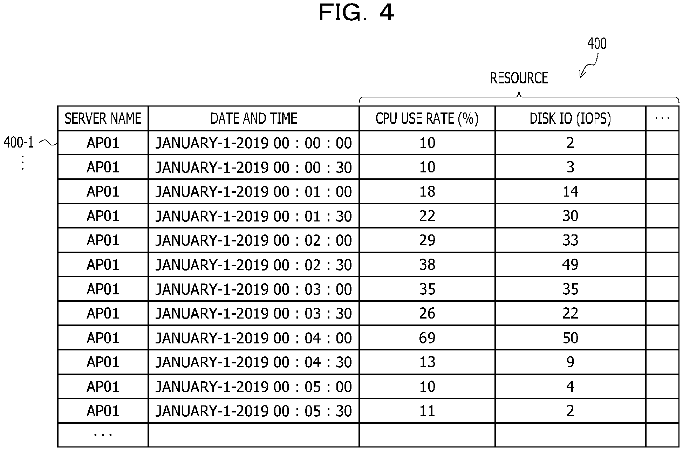

For example, the determination apparatus 100 includes various tables, which will be described below in FIGs. 4 to 10. For example, the determination apparatus 100 communicates with the business processing apparatus 201 to acquire entire operation data. For example, the determination apparatus 100 collects index values representing a usage status of a resource included in the business processing apparatuses 201 at a predetermined timing and generates entire operation data in which the collected index values are summarized. The index value is, for example, the usage amount of resource. The entire operation data is stored, for example, by using an operation table 400, which will be described below with reference to FIG. 4.

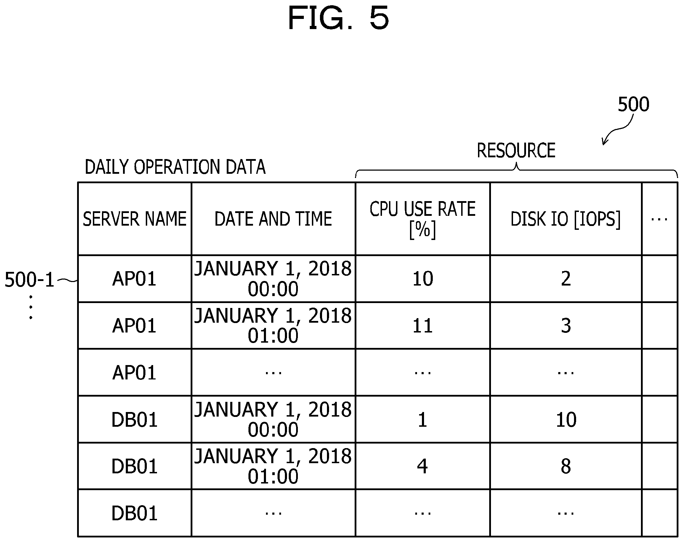

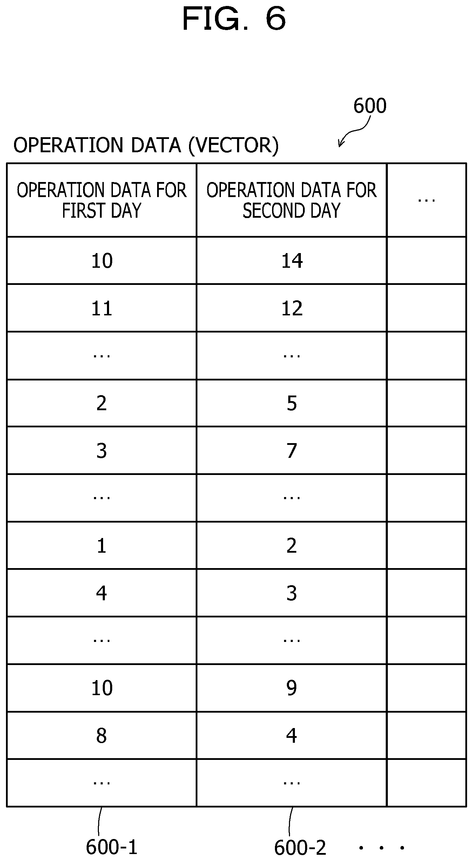

For example, the determination apparatus 100 divides the entire operation data at predetermined time intervals. A length of each of the predetermined time intervals is, for example, a single day. Daily operation data divided for each day is stored, for example, by using a daily table 500, which will be described below with reference to FIG. 5. For example, the determination apparatus 100 vectorizes the daily operation data divided for each day and generates daily vectors. The daily vectors are stored, for example, by using a vector table 600, which will be described below with reference to FIG. 6.

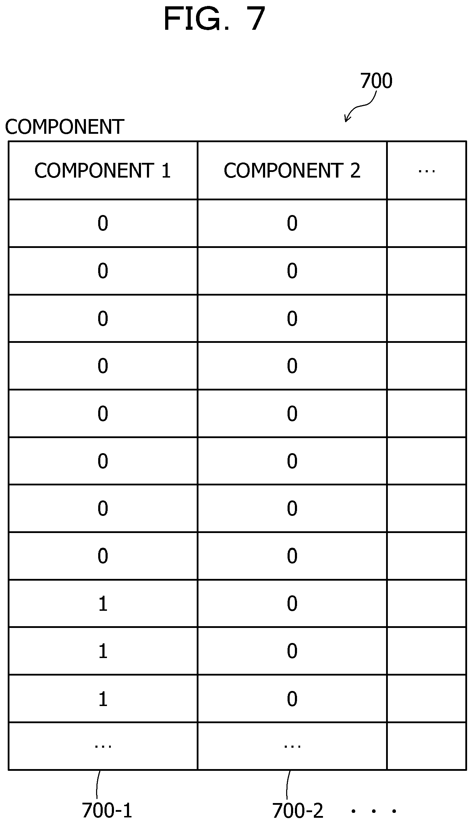

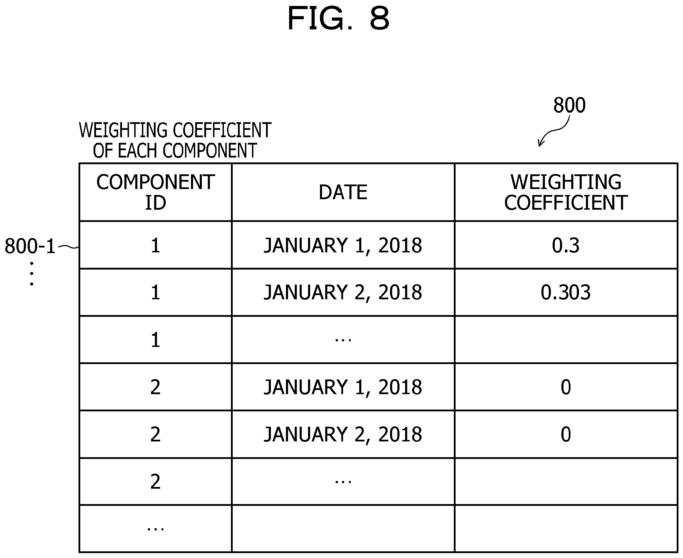

For example, the determination apparatus 100 generates an operation data matrix including the daily vectors as columns. The determination apparatus 100 executes, for example, nonnegative matrix factorization on the generated operation data matrix based on basis numbers so as to generate a basis matrix and a weight matrix. The basis matrix is stored by using, for example, a component table 700, which will be described below with reference to FIG. 7. The weight matrix is stored by using, for example, a weight table 800, which will be described below with reference to FIG. 8. The weighting coefficient forming the weight matrix corresponds to the index value indicating the use status of the service. For example, Reference Document 1 below may be referred to for the nonnegative matrix factorization.

Reference Document 1: Hoyer, Patrik O, "Non-negative matrix factorization with sparseness constraints." Journal of machine learning research 5. Nov (2004): 1457-1469.

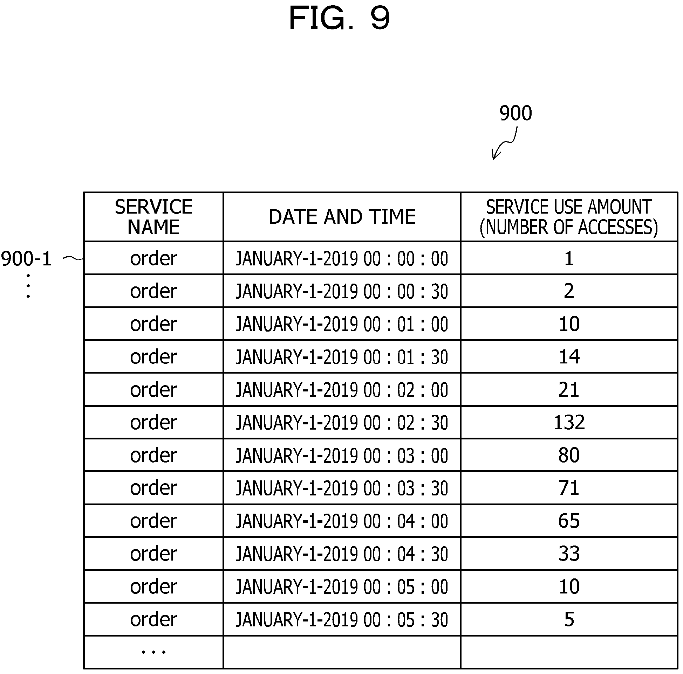

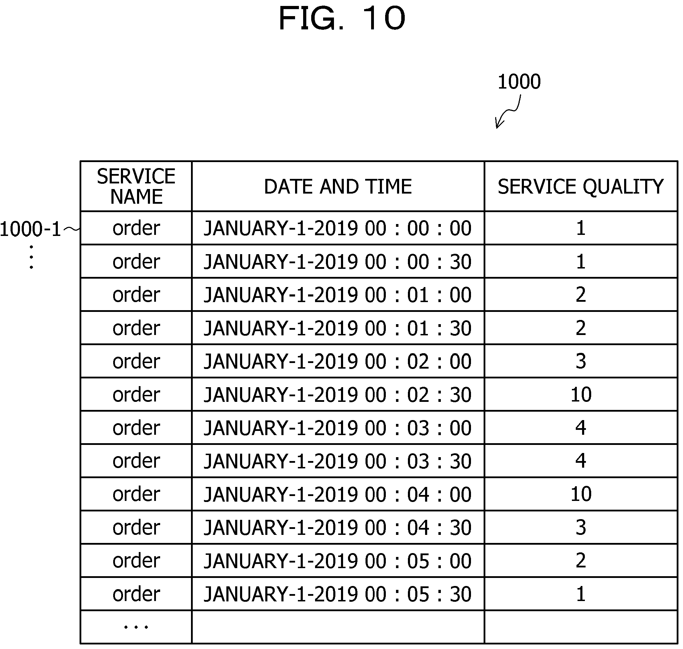

For example, the determination apparatus 100 may communicate with the business processing apparatus 201 and collect an index value indicating the use status of each service. The index value is, for example, the use amount of service. The index value indicating the use status of each service is stored, for example, by using a service use amount table 900, which will be described below with reference to FIG. 9. For example, the determination apparatus 100 communicates with the business processing apparatus 201 and collects an index value indicating quality of each service. The index value is, for example, a quality value of the service. The index value indicating the quality of each service is stored, for example, by using a service quality table 1000, which will described below with reference to FIG. 10.

For example, the determination apparatus 100 estimates a quality value of the service in future based on the weight table 800, which will be described below in FIG. 8, the service use amount table 900, which will be described below in FIG. 9, and the service quality table 1000, which will be described below in FIG. 10. For example, the determination apparatus 100 may estimate a quality value of the service in future based on the operation table 400, which will be described below in FIG. 4, the service use amount table 900, which will be described below in FIG. 9, and the service quality table 1000, which will be described below in FIG. 10.

For example, the determination apparatus 100 determines whether or not there is a period in which the quality value of the service in future is less than a threshold value. For example, when there is the period in which the quality value of the service in future is less than the threshold value, the determination apparatus 100 determines that the quality of the service is degraded in future, and outputs an alarm related to the service. The determination apparatus 100 is, for example, a server, a personal computer (PC), or the like.

The business processing apparatus 201 is a computer for executing business processes and realizing services. For example, a service execution infrastructure 220 in which the business processing apparatuses 201 are collected realizes a service by sharing the business processes that form the service. The business processing apparatus 201 executes, for example, any one of one or more processes that form the service. The business processing apparatus 201 has one or more resources, periodically measures and stores an index value indicating the usage status of each resource, and transmits the index value to the determination apparatus 100. The business processing apparatus 201 periodically measures and stores an index value indicating the use status of the service, and transmits the index value to the determination apparatus 100. The business processing apparatus 201 is, for example, a server, a PC, or the like.

The administrator-side apparatus 202 is a computer used by the system administrator. The administrator-side apparatus 202 receives the alarms related to the service from the determination apparatus 100. The administrator-side apparatus 202 outputs the received alarm. An output format is, for example, display on a display, a printing output to a printer, transmission to an external apparatus, storage in a storage area, or the like. For example, the administrator-side apparatus 202 is a PC, a tablet terminal, a smartphone, or the like.

Although the business processing system 200 includes one determination apparatus 100 according to the above description, the description is not limited thereto. For example, the business processing system 200 may include a plurality of determination apparatuses 100. The plurality of determination apparatuses 100 may cooperate to realize the above-described processes.

Although the determination apparatus 100 is a different apparatus from the business processing apparatus 201 according to the above description, the description is not limited thereto. For example, the determination apparatus 100 may be integrated with any one of the business processing apparatuses 201. Although the determination apparatus 100 is a different apparatus from administrator-side apparatus 202 according to the above description, the description is not limited thereto. For example, the determination apparatus 100 may be integrated with the administrator-side apparatus 202.

(Hardware Configuration Example of Determination Apparatus 100)

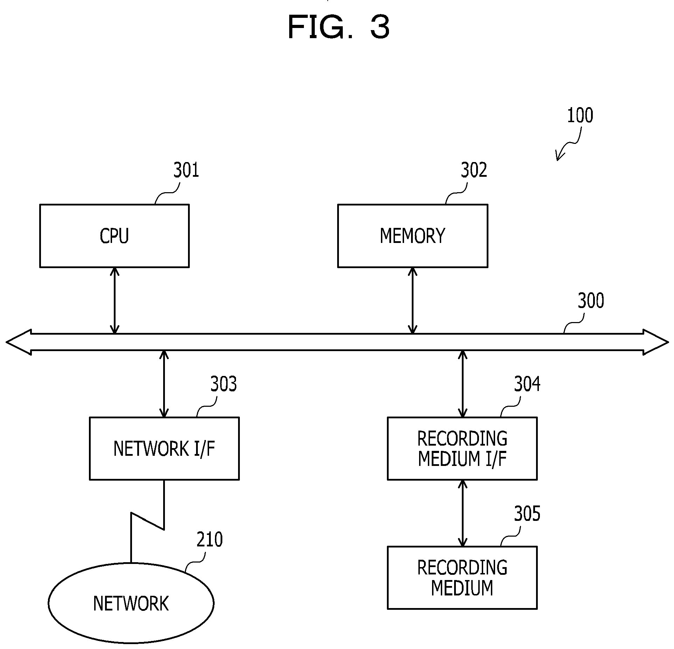

Next, a hardware configuration example of the determination apparatus 100 will be described with reference to FIG. 3.

FIG. 3 is a block diagram illustrating a hardware configuration example of the determination apparatus 100. In FIG. 3, the determination apparatus 100 includes a central processing unit (CPU) 301, a memory 302, a network interface (I/F) 303, a recording medium I/F 304, and a recording medium 305. The respective components are coupled to one another through a bus 300.

The CPU 301 controls the entirety of the determination apparatus 100. The memory 302 includes, for example, a read-only memory (ROM), a random-access memory (RAM), a flash ROM, and the like. For example, the flash ROM and the ROM store various programs, and the RAM is used as a work area of the CPU 301. The program stored in the memory 302 causes the CPU 301 to execute coded processes by being loaded into the CPU 301.

The network I/F 303 is coupled to the network 210 through a communication line and is coupled to another computer via the network 210. The network I/F 303 controls the network 210 and an internal interface so as to control an input and an output of data from and to the other computer. The network I/F 303 is, for example, a modem, a LAN adapter, or the like.

The recording medium I/F 304 controls reading and writing and of the data to and from the recording medium 305 under the control of the CPU 301. Examples of the recording medium I/F 304 include, a disk drive, a solid-state drive (SSD), a Universal Serial Bus (USB) port, and the like. The recording medium 305 is a non-volatile memory that stores the data written under the control of the recording medium I/F 304. Examples of the recording medium 305 include a disk, a semiconductor memory, a USB memory, and the like. The recording medium 305 may be attachable and detachable from the determination apparatus 100.

In addition to the above-described components, the determination apparatus 100 may include, for example, a keyboard, a mouse, a display, a printer, a scanner, a microphone, a speaker, and the like. The determination apparatus 100 may include a plurality of recording medium I/Fs 304 or a plurality of recording media 305. The determination apparatus 100 may not include the recording medium I/F 304 or the recording medium 305.

(Storage Contents in Operation Table 400)

Next, an example of contents stored in the operation table 400 will be described with reference to FIG. 4. The operation table 400 is realized by using, for example, a storage area of the memory 302, the recording medium 305, or the like of the determination apparatus 100 illustrated in FIG. 3.

FIG. 4 is an explanatory diagram illustrating an example of storage contents in the operation table 400. As illustrated in FIG. 4, the operation table 400 has a server name field, a date and time field, and one or more resource fields. A record 400-a is stored in the operation table 400 by setting information in each field. The value a is a predetermined integer.

A server name as identification information for identifying the business processing apparatus 201 is set in the server name field. In the date and time field, a combination of the date and the time at which an index value indicating a usage status of a resource is measured in the business processing apparatus 201 is set. The index value indicating the usage status of the resource is set in the resource field. The index value is, for example, the usage amount of resource.

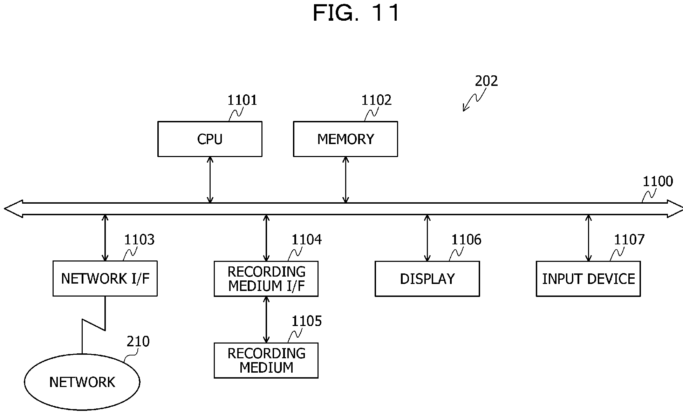

For example, the resource field includes a CPU use rate [%] field, a disk input/output (IO) [input/output per second (IOPS)] field, or the like. The CPU use rate [%] which is an index value indicating a usage status of the CPU 1101 (to be described below in FIG. 11) in the business processing apparatus 201 is set in the CPU use rate [%] field. The disk IO [IPOS] which is an index value indicating a usage status of the recording medium 1105 (to be described below in FIG. 11) in the business processing apparatus 201 is set in the disk IO [IPOS] field.

(Storage Contents in Daily Table 500)

Next, an example of contents stored in the daily table 500 will be described with reference to FIG. 5. The daily table 500 is realized by using, for example, a storage area of the memory 302, the recording medium 305, or the like of the determination apparatus 100 illustrated in FIG. 3.

FIG. 5 is an explanatory diagram illustrating an example of storage contents in the daily table 500. As illustrated in FIG. 5, the daily table 500 has a server name field, a date and time field, and one or more resource fields. A record 500-b is stored in the daily table 500 by setting information in each field. The value b is a predetermined integer.

The records in the daily table 500 are records for a single day extracted from the records in the operation table 400 illustrated in FIG. 4. Thus, information in the same manner as that in the respective fields of the operation table 400 illustrated in FIG. 4 is set in the respective fields of the daily table 500. A combination of a date and a time of the same day is set in the date and time field of the daily table 500.

(Storage Contents in Vector Table 600)

Next, an example of contents stored in the vector table 600 will be described with reference to FIG. 6. The vector table 600 is realized by using, for example, a storage area of the memory 302, the recording medium 305, or the like of the determination apparatus 100 illustrated in FIG. 3.

FIG. 6 is an explanatory diagram illustrating an example of storage contents in the vector table 600. As illustrated in FIG. 6, the vector table 600 has a daily operation data field for each day. A record 600-c is stored in the vector table 600 by setting information in each field. The value c is a predetermined integer.

Elements of a vector obtained by vectorizing the daily operation data obtained by dividing the entire operation data for each day are set in the daily operation data fields. The elements of the vector obtained by vectorizing the daily operation data are one or more index values indicating each usage status of one or a plurality of resources indicated by the daily operation data.

(Storage Contents in Component Table 700)

Next, an example of contents stored in the component table 700 will be described with reference to FIG. 7. The component table 700 is realized by using, for example, a storage area of the memory 302, the recording medium 305, or the like of the determination apparatus 100 illustrated in FIG. 3.

FIG. 7 is an explanatory diagram illustrating an example of storage contents in the component table 700. As illustrated in FIG. 7, the component table 700 has one or more component fields. A record 700-d is stored in the component table 700 by setting information in each field. The value d is a predetermined integer.

Component data for each resource indicated by basis vectors included in a basis matrix obtained by executing the nonnegative matrix factorization on the operation data matrix is set in the component fields. The component data is a set of component values for the resource. For example, one or each of a plurality of component values indicated by the basis vectors included in the basis matrix obtained by executing the nonnegative matrix factorization on the operation data matrix is set in the component fields.

(Storage Contents in Weight Table 800)

Next, an example of contents stored in the weight table 800 will be described with reference to FIG. 8. The weight table 800 is realized by using, for example, a storage area of the memory 302, the recording medium 305, or the like of the determination apparatus 100 illustrated in FIG. 3.

FIG. 8 is an explanatory diagram illustrating an example of storage contents in the weight table 800. As illustrated in FIG. 8, the weight table 800 has a component ID field, a date field, and a weighting coefficient field. A record 800-e is stored in the weight table 800 by setting information in each field. The value e is a predetermined integer.

A component ID for identifying the basis vector indicating the component data for each resource is set in the component ID field. A weighting coefficient being an element of a weight vector included in the weight matrix obtained by executing the nonnegative matrix factorization on the operation data matrix is associated with the component ID. The component data is a set of component values for the resource. The component ID is a column number of the component field of the component table 700 in which the component data for the corresponding resource indicated by the basis vector is set.

A date for identifying when a weight indicated by the weighting coefficient, which is an element of the weight vector, corresponds to the use amount of service is set in the date field. The weighting coefficient, which is an element of the weight vector, is set in the weighting coefficient field. The weighting coefficient indicates a coefficient corresponding to the use amount of service as a weight of the service.

(Storage Contents in Service Use Amount Table 900)

Next, an example of storage contents of the service use amount table 900 will be described with reference to FIG. 9. The service use amount table 900 is realized by using, for example, a storage area, such as the memory 302 or the recording medium 305, in the determination apparatus 100 illustrated in FIG. 3.

FIG. 9 is an explanatory diagram illustrating an example of storage contents of the service use amount table 900. As illustrated in FIG. 9, the service use amount table 900 includes fields for a service name, a date and time, and a service use amount. A record 900-f is stored in the service use amount table 900 by setting information in each field. The value f is a predetermined integer.

In the field of the service name, a service name is set as identification information for identifying a service. A combination of a date and a time when an index value indicating a use status of the service is measured is set in the date and time field. The index value indicating a use status of the service is set in the field of the service use amount. The index value is, for example, the use amount of service.

(Storage Contents in Service Quality Table 1000)

Next, an example of storage contents in the service quality table 1000 will be described with reference to FIG. 10. The service quality table 1000 is realized by using, for example, a storage area, such as the memory 302 or the recording medium 305, in the determination apparatus 100 illustrated in FIG. 3.

FIG. 10 is an explanatory diagram illustrating an example of storage contents of the service quality table 1000. As illustrated in FIG. 10, the service quality table 1000 includes a service name field, a date and time field, and a service quality field. A record 1000-g is stored in the service quality table 1000 by setting information in each field. The value g is a predetermined integer.

In the field of the service name, a service name is set as identification information for identifying a service. A combination of a date and a time when an index value indicating quality of the service is measured is set in the date and time field. The index value indicating the quality of the service is set in the field of the service quality. The index value is a value indicating an advantage of the service, and the smaller the request response time [ms], the larger the index value, for example.

(Hardware Configuration Example of Business Processing Apparatus 201)

An example of a hardware configuration of the business processing apparatus 201 has the same manner as that of the determination apparatus 100 illustrated in FIG. 3. Thus, description of the example of the hardware configuration of the business processing apparatus 201 is omitted.

(Hardware Configuration Example of Administrator-side Apparatus 202)

Next, a hardware configuration example of the administrator-side apparatus 202 included in the business processing system 200 illustrated in FIG. 2 will be described with reference to FIG. 11.

FIG. 11 is a block diagram illustrating a hardware configuration example of the administrator-side apparatus 202. In FIG. 11, the administrator-side apparatus 202 includes a CPU 1101, a memory 1102, a network I/F 1103, a recording medium I/F 1104, a recording medium 1105, a display 1106, and an input device 1107. The respective components are coupled to one another through a bus 1100.

The CPU 1101 controls the entirety of the administrator-side apparatus 202. The memory 1102 includes, for example, a ROM, a RAM, a flash ROM, and the like. For example, the flash ROM and the ROM store various programs, and the RAM is used as a work area of the CPU 1101. The program stored in the memory 1102 causes the CPU 1101 to execute coded processes by being loaded into the CPU 1101.

The network I/F 1103 is coupled to the network 210 through a communication line and is coupled to another computer via the network 210. The network I/F 1103 controls the network 210 and an internal interface so as to control an input and an output of data from and to the other computer. The network I/F 1103 is, for example, a modem, a LAN adapter, or the like.

The recording medium I/F 1104 controls reading and writing of the data to and from the recording medium 1105 under the control of the CPU 1101. The recording medium I/F 1104 is, for example, a disk drive, an SSD, a USB port, or the like. The recording medium 1105 is a non-volatile memory that stores the data written under the control of the recording medium I/F 1104. Examples of the recording medium 1105 include a disk, a semiconductor memory, a USB memory, and the like. The recording medium 1105 may be attachable and detachable from the administrator-side apparatus 202.

The display 1106 displays not only a cursor, an icon, and a tool box but also data of a document, an image, functional information, and the like. The display 1106 is, for example, a cathode ray tube (CRT), a liquid crystal display, an organic electroluminescence (EL) display, or the like. The input device 1107 includes keys for inputting letters, numbers, various instructions, and the like, and performs an input of data. The input device 1107 may be a keyboard, a mouse, or the like, or may be a touch panel type-input pad, a numeric keypad, or the like.

In addition to the above-described components, the administrator-side apparatus 202 may include, for example, a printer, a scanner, a microphone, a speaker, and the like. The administrator-side apparatus 202 may include a plurality of recording medium I/Fs 1104 or a plurality of recording media 1105. The administrator-side apparatus 202 may not include the recording medium I/F 1104 or the recording medium 1105.

(Functional Configuration Example of Determination Apparatus 100)

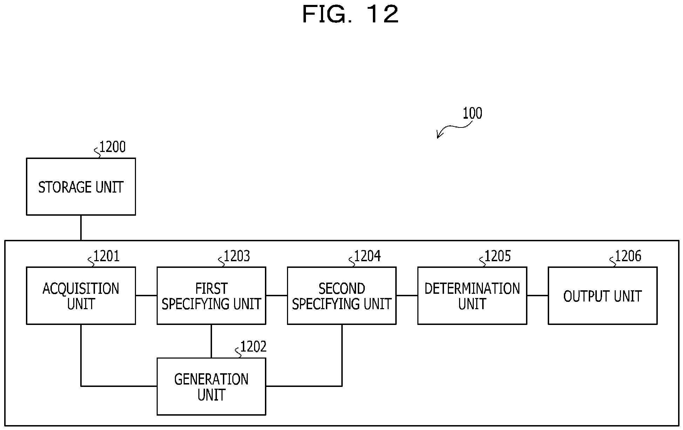

Next, a functional configuration example of the determination apparatus 100 will be described with reference to FIG. 12.

FIG. 12 is a block diagram illustrating a functional configuration example of the determination apparatus 100. The determination apparatus 100 includes a storage unit 1200, an acquisition unit 1201, a generation unit 1202, a first specifying unit 1203, a second specifying unit 1204, a determination unit 1205, and an output unit 1206.

The storage unit 1200 is realized by, for example, a storage area of the memory 302, the recording medium 305, or the like illustrated in FIG. 3. Hereinafter, a case where the storage unit 1200 is included in the determination apparatus 100 will be described, and the embodiment is not limited thereto. For example, there may be a case where the storage unit 1200 is included in an apparatus different from the determination apparatus 100 and the determination apparatus 100 may be referred to the storage contents of the storage unit 1200.

The acquisition unit 1201 to the output unit 1206 function as an example of a control unit. For example, functions of the acquisition unit 1201 to the output unit 1206 are implemented by causing the CPU 301 to execute a program stored in the storage area such as the memory 302 and the recording medium 305 illustrated in FIG. 3 or by using the network I/F 303. A result of the process performed by each functional unit is stored in the storage area such as the memory 302 and the recording medium 305 illustrated in FIG. 3, for example.

The storage unit 1200 stores various types of information to be referred to or updated in the processes of the respective functional units. The storage unit 1200 stores the usage amount of resource related to a service in at least one time point. The usage amount of resource is the usage amount of CPU, the usage amount of memory, or the usage amount of communication bandwidth. For example, the storage unit 1200 stores the operation table 400 illustrated in FIG. 4.

The storage unit 1200 stores the use amount of service in at least one time point. The use amount of service is the number of accesses to the service. For example, the storage unit 1200 stores the service use amount table 900 illustrated in FIG. 9. The storage unit 1200 stores a quality value of the service in at least one time point. The quality value of the service is a response time period of the service to a request. For example, the storage unit 1200 stores the service quality table 1000 illustrated in FIG. 10.

The storage unit 1200 stores a first model. The first model is a model that outputs the usage amount of resource at any time point in future predicted from input usage amounts of resource at one or more time points. The first model is generated by, for example, the generation unit 1202. The first model may be acquired by the acquisition unit 1201, for example.

The storage unit 1200 stores a second model. The second model is a model that outputs the use amount of service at any time point in future predicted from input use amounts of service at one or more time points. The second model is generated, for example, by the generation unit 1202. The second model may be acquired by the acquisition unit 1201, for example.

The storage unit 1200 stores a third model. The third model is a model that outputs a quality value of a service corresponding to an input usage amount of resource and an input use amount of service. The third model is generated, for example, by the generation unit 1202. The third model may be acquired by the acquisition unit 1201, for example.

The acquisition unit 1201 acquires various types of information used for processes of the respective functional units. The acquisition unit 1201 stores the acquired various types of information in the storage unit 1200 or outputs the information to the respective functional units. The acquisition unit 1201 may output the various types of information stored in the storage unit 1200 to the respective functional units. For example, the acquisition unit 1201 acquires various types of information based on an operation input by a user. For example, the acquisition unit 1201 may receive the various types of information from an apparatus different from the determination apparatus 100.

The acquisition unit 1201 may accept a start trigger for starting a process of any functional unit. The start trigger is, for example, a predetermined operation input by the user. The start trigger may be reception of predetermined information from another computer, for example. The start trigger may be, for example, an output of predetermined information by any one of the functional units.

The acquisition unit 1201 may accept, as a start trigger for starting a process of the generation unit 1202, acquisition of the usage amount of resource, the use amount of service, and a quality value of the service. The acquisition unit 1201 may accept the acquisition of the usage amount of resource, the use amount of service, and the quality value of the service as a start trigger for starting processes of the first specifying unit 1203, the second specifying unit 1204, and the determination unit 1205.

The acquisition unit 1201 acquires the usage amount of resource related to the service. The acquisition unit 1201 acquires, for example, the usage amounts of resources at a plurality of time points used by the generation unit 1202. For example, the acquisition unit 1201 acquires the usage amount of resource at the plurality of time points by collecting the usage amount of resource from the business processing apparatus 201.

The acquisition unit 1201 acquires, for example, the usage amount of resource at one or more time points used by the first specifying unit 1203. For example, the acquisition unit 1201 acquires the usage amount of resource at one or more time points by collecting the usage amount of resource from the business processing apparatus 201. The usage amounts of resources at the plurality of time points used by the generation unit 1202 may include the usage amounts of resources at one or more time points used by the first specifying unit 1203.

The acquisition unit 1201 acquires the use amount of service. The acquisition unit 1201 acquires, for example, the use amount of service at a plurality of time points, which is used by the generation unit 1202. For example, the acquisition unit 1201 acquires the use amounts of service at the plurality of time points by collecting the use amount of service from the business processing apparatuses 201.

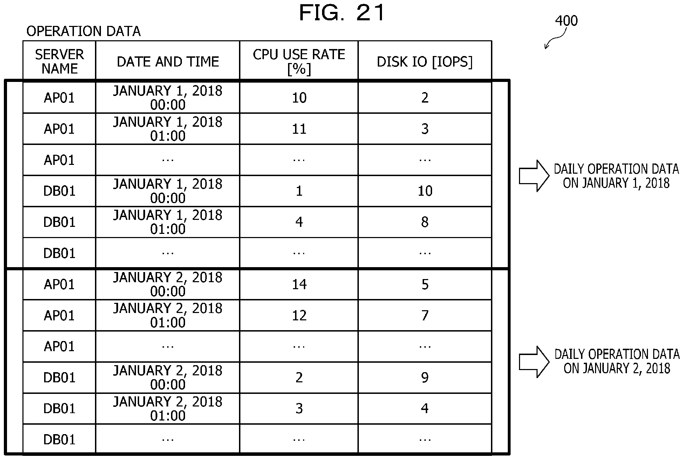

The acquisition unit 1201 acquires, for example, the use amount of service at one or more time points used by the first specifying unit 1203. The use amounts of service at the plurality of time points used by the generation unit 1202 may include the use amounts of service at one or more time points used by the first specifying unit 1203. For example, the acquisition unit 1201 may acquire the use amount of service obtained as a result of analyzing the usage amount of resource. A specific example of the analysis method will be described below with reference to FIGs. 21 to 25, for example.

The acquisition unit 1201 acquires a quality value of a service associated with the usage amount of resource and the use amount of service. For example, the acquisition unit 1201 acquires the quality value of the service that is used by the generation unit 1202, the second specifying unit 1204, or the determination unit 1205 and that is associated with the usage amount of resource and the use amount of service in at least one past time point. For example, the acquisition unit 1201 acquires the quality value of the service associated with the usage amount of resource approximated to the usage amount of specified resource and the use amount of service approximated to the use amount of specified service at any past time point.

The acquisition unit 1201 may acquire the first model. For example, the acquisition unit 1201 acquires the first model based on an operation input of the user. The acquisition unit 1201 may acquire the second model. For example, the acquisition unit 1201 acquires the second model based on an operation input of the user. The acquisition unit 1201 may acquire the third model. For example, the acquisition unit 1201 acquires the third model based on an operation input of the user.

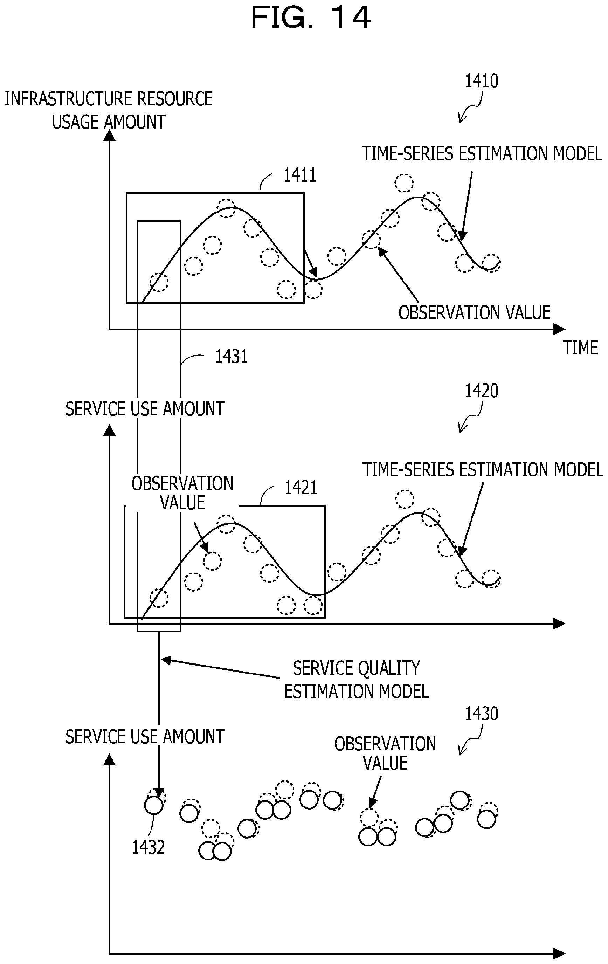

The generation unit 1202 generates the first model based on the acquired usage amounts of resources at the plurality of time points. For example, the generation unit 1202 generates the first model by using an auto-regression model (for example, AR, ARMA, ARIMA, SARIMA, or the like) based on the acquired usage amount of resource at the plurality of time points. A specific example of generating the first model will be described below with reference to FIGs. 14 to 17, for example.

The generation unit 1202 generates the second model based on the acquired use amount of service at the plurality of time points. For example, the generation unit 1202 generates the second model by using an auto-regression model (for example, AR, ARMA, ARIMA, SARIMA, or the like) based on the acquired usage amount of resource at the plurality of time points. A specific example of generating the second model will be described below with reference to FIGs. 14 to 17, for example.

The generation unit 1202 generates the third model based on the acquired quality value of the service at any past time point. For example, the generation unit 1202 generates the third model by using a vector auto-regression model (for example, VAR) based on the acquired quality value of the service at any past time point. A specific example of generating the third model will be described below with reference to FIGs. 14 to 17, for example.

The first specifying unit 1203 uses the first model to specify the usage amount of resource at any time point in future predicted from the acquired usage amount of resource at one or more time points. The first specifying unit 1203 inputs the acquired usage amounts of resource at one or more time points to the first model to specify the usage amount of resource at any time point in future.

The first specifying unit 1203 uses the second model to specify the use amount of service at any time point in future predicted from the acquired use amounts of service at one or more time points. For example, the first specifying unit 1203 inputs the acquired use amounts of service at one or more time points to the second model to specify a use amount of service at any time point in future.

The second specifying unit 1204 uses the third model to specify a quality value of the service predicted from the specified usage amount of resource and the specified use amount of service. For example, the second specifying unit 1204 inputs the specified usage amount of resource and the specified use amount of service to the third model to specify a quality value of the service. Thus, the second specifying unit 1204 may specify the quality value of the service at any time point in future.

The determination unit 1205 determines, based on the acquired quality value of the service, the specified usage amount of resource, and the specified use amount of service, whether or not to output an alarm related to the service. For example, when there is a quality value associated with a usage amount approximated to the specified usage amount of resource and a use amount approximated to the specified use amount of service among the acquired quality values of the service, the determination unit 1205 acquires the quality value. The approximation means that the values are close to each other. The approximation is, for example, that a difference between the values is equal to or smaller than a threshold value.

For example, when the acquired quality value is less than a threshold value, the determination unit 1205 determines to output an alarm related to the service. The alarm includes, for example, information indicating a cause of a decrease in quality value of the service. On the other hand, for example, when the acquired quality value is equal to or higher than the threshold value, the determination unit 1205 determines not to output the alarm related to the service.

The determination unit 1205 determines, based on the quality value of the service specified by the second specifying unit 1204, whether or not to output the alarm related to the service. For example, when the quality value of the service specified by the second specifying unit 1204 is less than the threshold value, the determination unit 1205 determines to output the alarm related to the service. The alarm includes, for example, information indicating a cause of a decrease in quality value of the service. On the other hand, for example, when the quality value of the service specified by the second specifying unit 1204 is equal to or higher than the threshold value, the determination unit 1205 determines not to output the alarm related to the service.

The output unit 1206 outputs the processing result of any one of the functional units. For example, the output is made in the form of display on a display, print output to a printer, transmission to an external apparatus through the network I/F 303, or storage in a storage area such as the memory 302 or the recording medium 305. Thus, the output unit 1206 may notify the user of the processing result of any one of the functional units, and it is possible to improve convenience of the determination apparatus 100.

In a case where it is determined that the alarm is to be output, the output unit 1206 outputs the alarm. For example, the output is made in the form of display on a display, print output to a printer, transmission to an external apparatus through the network I/F 303, or storage in a storage area such as the memory 302 or the recording medium 305. The output unit 1206 transmits, for example, the alarm to the administrator-side apparatus 202. Thus, the output unit 1206 enables the system administrator to recognize the alarm and recognize that the service quality may be degraded in future.

(Specific Functional Configuration Example of Determination Apparatus 100)

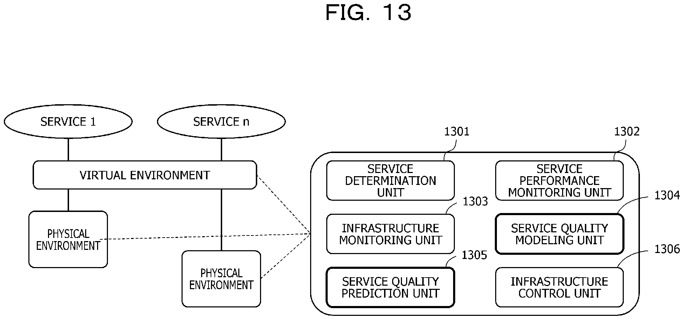

Next, a specific functional configuration example of the determination apparatus 100 will be described with reference to FIG. 13.

FIG. 13 is a block diagram illustrating a specific functional configuration example of the determination apparatus 100. The determination apparatus 100 monitors a virtual environment and a physical environment formed by the business processing apparatus 201. Services are implemented in the virtual environment and the physical environment.

The determination apparatus 100 includes a service determination unit 1301, a service performance monitoring unit 1302, an infrastructure monitoring unit 1303, a service quality modeling unit 1304, a service quality prediction unit 1305, and an infrastructure control unit 1306.

As will be described below with reference to FIG. 14, the service determination unit 1301 communicates with the business processing apparatus 201 and acquires the use amount of service. For example, the service determination unit 1301 determines a service in operation and acquires the use amount of service in operation. The use amount is, for example, a service operation rate per unit time. In some cases, as will be described below with reference to FIGs. 21 to 25, the service determination unit 1301 calculates a weighting coefficient as the use amount of service in operation.

As will be described below with reference to FIG. 14, the service performance monitoring unit 1302 communicates with the business processing apparatus 201 and acquires a quality value of the service. For example, when the service is a web service, the service performance monitoring unit 1302 acquires, as the quality value of the service, an index value indicating an advantage of the service based on a delay time to a request. For example, when the service is a file server service, the service performance monitoring unit 1302 acquires, as the quality value of the service, an index value indicating an advantage of the service based on a throughput. For example, when the service is another file server service, the service performance monitoring unit 1302 acquires, as the quality value of the service, an index value indicating an advantage of the service based on a packet loss rate.

As will be described below with reference to FIG. 14, the infrastructure monitoring unit 1303 communicates with the business processing apparatuses 201 and acquires the usage amount of infrastructure resource. As will be described below in FIGs. 14 to 17, the service quality modeling unit 1304 generates an infrastructure resource estimation model, a service use amount estimation model, and a service quality estimation model. The service quality prediction unit 1305 acquires a quality value of a service in future by using the infrastructure resource estimation model, the service use amount estimation model, and the service quality estimation model.

The infrastructure control unit 1306 outputs an alarm based on the quality value of the service in future. At this time, the infrastructure control unit 1306 may specify an infrastructure resource determined to be a cause of a decrease in quality value of the service in future, and may include information on the specified infrastructure resource in the alarm. The infrastructure control unit 1306 uses, for example, JIT modeling to specify the infrastructure resource determined to be the cause of the decrease in quality value of the service in future. Regarding the JIT modeling, for example, it is possible to refer to the following Reference Document 2, the following Reference Document 3, and the like.

Reference Document 2: Stenman, A., Gustafsson, F. and Ljung, L.: "Just In Time Models For Dynamical Systems", in Proc. 35th Conf. Decision and Control, Dec. 1115/1120 (1996)

Reference Document 3: Shun Ushida, Hidenori Kimura: "Just-In-Time Approach to Nonlinear Identification and Control", Journal of the Society of Instrument and Control Engineers, Vol. 44, No. 2, 102/106 (2005)

(Example in which Determination Apparatus 100 Determines Alarm Output)

Next, with reference to FIGs. 14 to 20, an example in which the determination apparatus 100 determines whether or not an alarm is to be output will be described.

FIGs. 14 to 20 are explanatory diagrams illustrating an example in which the determination apparatus 100 determines whether or not an alarm is to be output. In FIG. 14, the service determination unit 1301 communicates with the business processing apparatus 201, determines a service in operation, and acquires the use amount of service in operation. The use amount is, for example, a service operation rate per unit time. In the example illustrated in FIG. 14, the service determination unit 1301 acquires the use amount of service at each of a plurality of time points as indicated by a dotted circle in a graph 1420.

In some cases, as will be described below with reference to FIGs. 21 to 25, the service determination unit 1301 calculates a weighting coefficient as the use amount of service in operation. As characteristics of the service in the business processing system 200, for example, the following two characteristics may be considered.

For example, a first characteristic in which the use amount of service indicates a periodical variation tendency at predetermined time intervals such as minutes, hours, days, weeks, or months is considered. For example, a second characteristic in which a usage status of each of one or more resources is determined based on the use amount of each of one or more services is considered.

With the above-described characteristics, it is considered that, among time-series data indicating a temporal variation of index values respectively indicating usage statuses of different resources, pieces of component data corresponding to the same service become pieces of component data approximated to one another in periodical variation tendency at predetermined time intervals. With the above-described characteristics, a load model is considered in which an index value indicating a usage status of each of one or more resources is proportional to the use amount of each of one or more services. Thus, by using the load model, the service determination unit 1301 may acquire information on the use amount of each service at predetermined time intervals.

The service performance monitoring unit 1302 communicates with the business processing apparatus 201 and acquires a quality value of the service. In the example illustrated in FIG. 14, the service performance monitoring unit 1302 acquires a quality value of the service at each of a plurality of time points indicated by a dotted circle in a graph 1430. The infrastructure monitoring unit 1303 communicates with the business processing apparatus 201 and acquires the usage amount of infrastructure resource. In the example illustrated in FIG. 14, the infrastructure monitoring unit 1303 acquires the usage amount of infrastructure resource at each of a plurality of time points as indicated by a dotted circle in a graph 1410.

The service quality modeling unit 1304 generates an infrastructure resource estimation model. The infrastructure resource estimation model is a time-series estimation model. In the example illustrated in FIG. 14, the infrastructure resource estimation model is a time-series estimation model as indicated by a solid line in the graph 1410. For example, the service quality modeling unit 1304 generates the infrastructure resource estimation model based on some of the usage amounts of infrastructure resource in a range 1411.

In the same manner, the service quality modeling unit 1304 generates a service use amount estimation model. The service use amount estimation model is a time-series estimation model. In the example in FIG. 14, the service use amount estimation model is a time-series estimation model as indicated by a solid line in the graph 1420. For example, the service quality modeling unit 1304 generates a service use amount estimation model based on some of the use amounts of service in a range 1421.

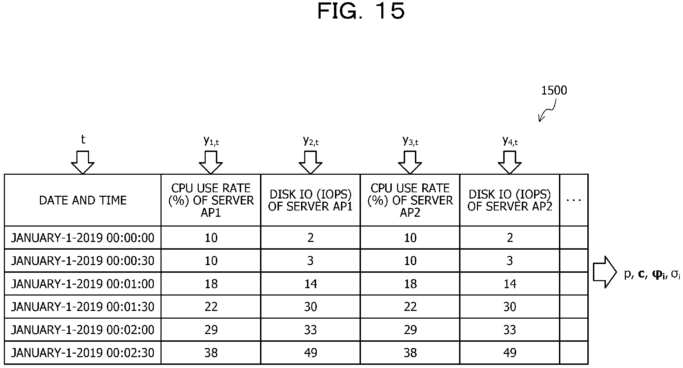

The service quality modeling unit 1304 generates a service quality estimation model. In the example in FIG. 14, the service quality estimation model is an estimation model in which a quality value 1432 may be estimated, based on the usage amount of infrastructure resource and the use amount of service at a time point 1431. The service quality estimation model is, for example, a function f (the usage amount of infrastructure resource and the use amount of service). Description continues with reference to FIG. 15, and a specific example in which the service quality modeling unit 1304 generates the infrastructure resource estimation model will be described.

In FIG. 15, the service quality modeling unit 1304 refers to the operation table 400 illustrated in FIG. 4 to acquire the usage amount of infrastructure resource related to a service, and set the usage amount in a table 1500. The service quality modeling unit 1304 generates an infrastructure resource estimation model defined by the following equation (1) by using a vector auto-regression model (VAR) for modeling a mutual influence between a plurality of pieces of time-series data.

$$y_t = c + \varphi_1 y_{t-1} + \ldots + \varphi_p y_{t-p} + \varepsilon_t, \ \varepsilon_{i,t} \text{ to } N\left(0, \sigma_i^2\right) \ldots (1)$$

In the above equation (1), $y_t \in R^{n \times 1}$ is a vector in which n variables (the usage amounts of infrastructure resource) at a time point t are arranged. $c \in R^{n \times 1}$ is a constant vector. $\varphi_i \in R^{n \times n}$ is a coefficient matrix. $\varepsilon_t \in R^{n \times 1}$ is an error vector.

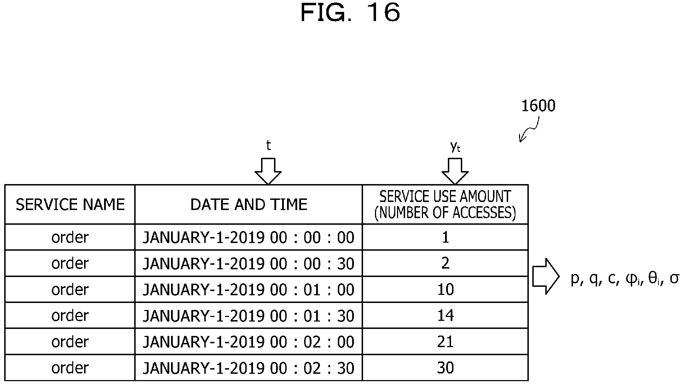

For example, the service quality modeling unit 1304 uses elements of the table 1500 as respective t, $y_{1,t}$, $y_{2,t}$, $y_{3,t}$, $y_{4,t}$, ... to calculate parameters p, c, $\varphi_i$, and $\sigma_i$ in the above equation (1). Thus, the service quality modeling unit 1304 may generate the service use amount estimation model. Description continues with reference to FIG. 16, and a specific example in which the service quality modeling unit 1304 generates a service use amount estimation model will be described.

In FIG. 16, the service quality modeling unit 1304 refers to the service use amount table 900 illustrated in FIG. 9 to acquire the use amount of service, and set the use amount in a table 1600. The service quality modeling unit 1304 generates a service use amount estimation model defined by the following equation (2) by using an auto-regression model (such as AR, ARMA, ARIMA, and SARIMA).

$$y_t = c + \Sigma_{i=1}^{p}\left(\varphi_i y_{t-i}\right) + \varepsilon_t + \Sigma_{j=1}^{q}\left(\theta_j \varepsilon_{t-j} \varepsilon_t \text{ to } N\left(0, \sigma^2\right)\right) \ldots (2)$$

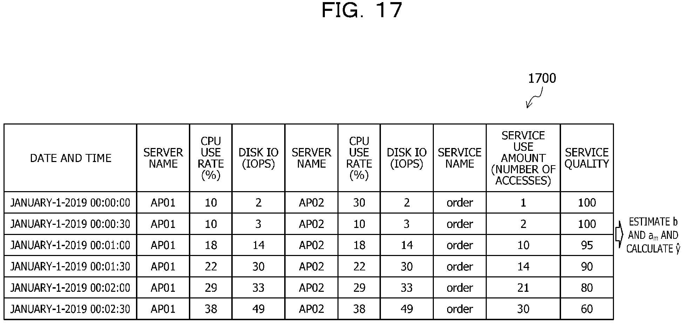

In the above equation (2), $y_t$ is a variable (the use amount of service) at the time point t. c is a constant. $\varphi_i$ is an i-th order auto-regression coefficient. $\theta_i$ is an i-th order movement average coefficient. For example, the service quality modeling unit 1304 uses the elements of the table 1600 as respective t and $y_t$ to calculate parameters p, q, c, $\varphi_i$, $\theta_i$, and

σ in the above equation (2). Thus, the service quality modeling unit 1304 may generate the service use amount estimation model. Description continues with reference to FIG. 17, and a specific example in which the service quality modeling unit 1304 generates a service quality estimation model will be described.

In FIG. 17, the service quality modeling unit 1304 generates a table 1700 by referring to the operation table 400 illustrated in FIG. 4, the service use amount table 900 illustrated in FIG. 9, and the service quality table 1000 illustrated in FIG. 10. The service quality modeling unit 1304 generates a service quality estimation model defined by the following equation (3) by using the JIT modeling (a local regression model).

$$ y^\wedge = b + \Sigma_{m=1}^{M} (a_m x_n) \ ... \ (3) $$

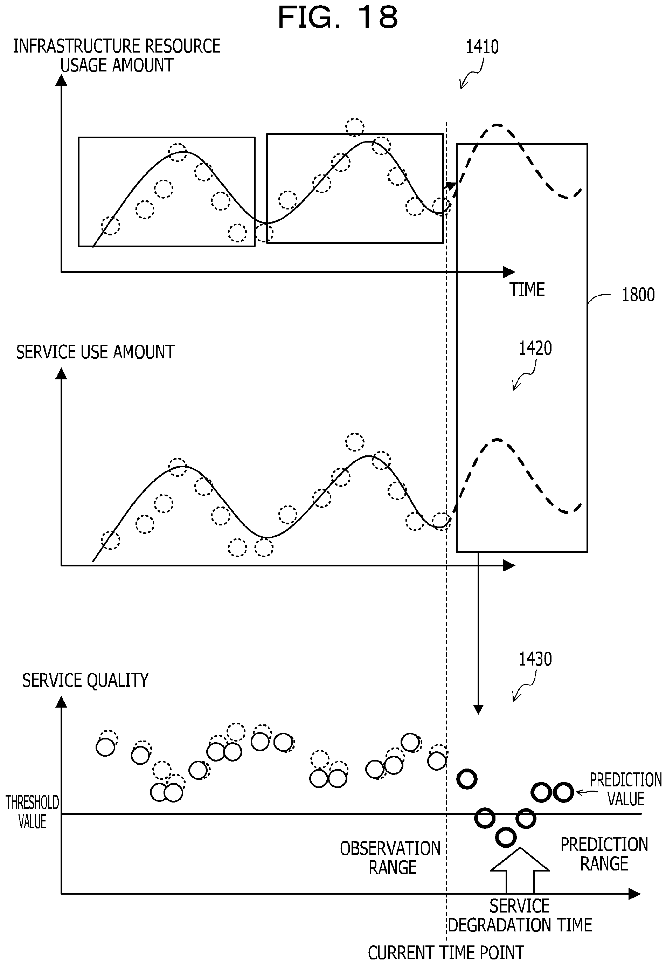

In the above equation (3), $y^\wedge$ is a prediction value of a quality value of a service. b is a constant. $a_m$ is a coefficient. $x_m$ is input data. The input data includes the usage amount of infrastructure resource and the use amount of service. M is the number of pieces of input data, and is equal to the number of infrastructure resources + 1. For example, the service quality modeling unit 1304 calculates parameters b and $a_m$ in the above equation (3) by using elements of the table 1700 as the input data. Thus, the service quality modeling unit 1304 may generate the service quality estimation model. Next, description continues with reference to FIG. 18.

In FIG. 18, the service quality prediction unit 1305 estimates the usage amount of infrastructure resource in future at each time point in a range 1800 after the current time point by using the infrastructure resource estimation model. The service quality prediction unit 1305 estimates the use amount of service in future at each time point in the range 1800 after the current time point by using the service use amount estimation model.

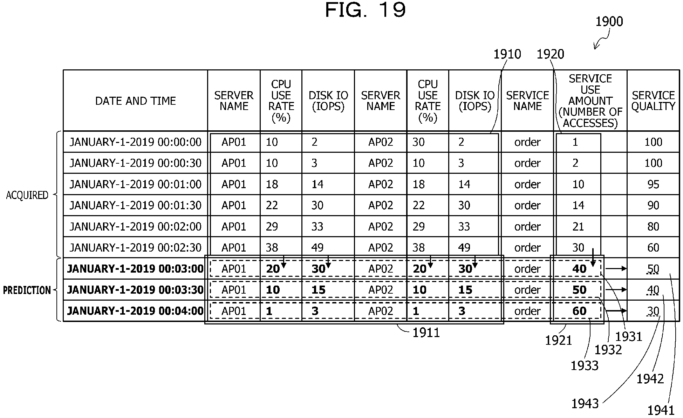

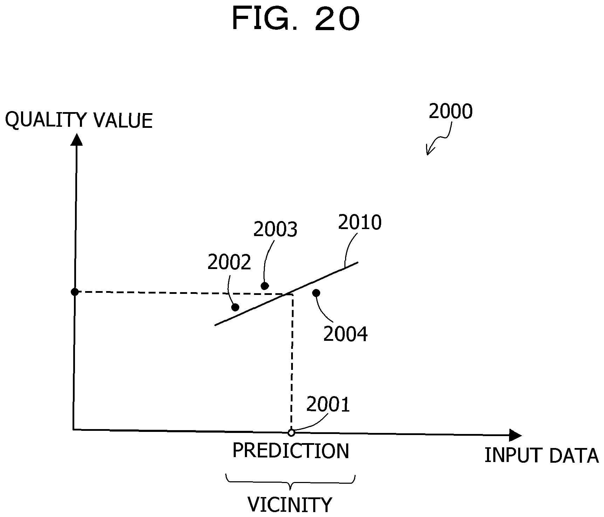

The service quality prediction unit 1305 calculates, by using the service quality estimation model, a prediction value of a quality value of the service in future corresponding to a combination of the usage amount of infrastructure resource in future and the use amount of service in future at each time point in the range 1800. In the example in FIG. 18, the prediction value is indicated by a bold line circle. Details of calculation for the prediction value of the quality value of the service in future by the service quality prediction unit 1305 will be described below with reference to FIGs. 19 and 20.

The infrastructure control unit 1306 determines whether or not an alarm is to be output, based on the prediction value of the quality value of the service in future. For example, the infrastructure control unit 1306 determines, based on the prediction value of the quality value of the service in future, whether or not there is a period in which the prediction value of the quality value of the service in future is less than a threshold value. In a case where there is the period in which the prediction value of the quality value of the service in future is less than the threshold value, the infrastructure control unit 1306 determines to output an alarm and outputs the alarm. On the other hand, when there is no period in which the prediction value of the quality value of the service in future is less than the threshold value, the infrastructure control unit 1306 determines not to output the alarm. Next, description continues with reference to FIG. 19.

As illustrated in FIG. 19, for example, the service quality prediction unit 1305 inputs information 1910 on the usage amount of infrastructure resource in a table 1900 to the infrastructure resource estimation model to acquire information 1911 on the usage amount of infrastructure resource in future. For example, the service quality prediction unit 1305 inputs information 1920 on the use amount of service in the table 1900 to the service use amount estimation model to acquire information 1921 on the use amount of service in future.

For example, the service quality prediction unit 1305 inputs information 1931 on the usage amount of infrastructure resource and the use amount of service at a time point of "2019-01-01 00: 03: 00" in future to the service quality estimation model. Thus, the service quality prediction unit 1305 acquires a prediction value 1941 of the quality value of the service at the same time point of "2019-01-01 00: 03: 00".

In the same manner, the service quality prediction unit 1305 inputs information 1932 on the usage amount of infrastructure resource and the use amount of service at a time point of "2019-01-01 00: 03: 30" in future to the service quality estimation model, for example. Thus, the service quality prediction unit 1305 acquires a prediction value 1942 of the quality value of the service at the same time point of "2019-01-01 00: 03: 30".

In the same manner, the service quality prediction unit 1305 inputs information 1933 on the usage amount of infrastructure resource and the use amount of service at a time point of "2019-01-01 00: 04: 00" in future to the service quality estimation model, for example. Thus, the service quality prediction unit 1305 acquires a prediction value 1943 of the quality value of the service at the same time point of "2019-01-01 00: 04: 00".

Thus, the determination apparatus 100 enables the system administrator to recognize whether or not the quality of the service is to be degraded in future. Therefore, before the quality of the service is degraded, the system administrator may specify any resource causing the degradation in the quality of the service and start an operation for handling the specified resource.

As a result, the system administrator may reduce a time for the service quality to recover after the service quality is degraded. In some cases, the system administrator may avoid the degradation in the quality of the service. The system administrator may avoid or suppress the degradation in convenience of the service. The system administrator may reduce an operation load on the service administrator. The determination apparatus 100 may reduce the operation load on the system administrator.

Although the case where the service quality estimation model is generated before the service quality prediction unit 1305 estimates the usage amount of infrastructure resource in future and the use amount of service in future is described, the embodiment is not limited thereto. For example, the service quality estimation model may be generated after the service quality prediction unit 1305 estimates the usage amount of infrastructure resource in future and the use amount of service in future.

Description continues with reference to FIG. 20, and a case where a service quality estimation model is generated after the service quality prediction unit 1305 estimates a usage amount of infrastructure resource in future and a use amount of service in future will be described.

In FIG. 20, it is assumed that the service quality prediction unit 1305 already estimates the usage amount of infrastructure resources in future and the use amount of service in future. In this case, when generating a service quality estimation model, the service quality modeling unit 1304 uses a usage amount approximated to the estimated usage amount of infrastructure resource in future and a use amount approximated to the estimated use amount of service in future.

For example, the service quality modeling unit 1304 extracts, from the table 1700 described above, a record in which the usage amount approximated to the estimated usage amount of infrastructure resource in future, the use amount approximated to the estimated use amount of service in future, and a quality value of the service are associated with each other. For example, the service quality modeling unit 1304 generates a service quality estimation model based on the extracted record.

Data 2001 corresponding to a combination of the estimated usage amount of infrastructure resource in future and the estimated use amount of service in future is illustrated on a data axis of a graph 2000 in FIG. 20. The service quality modeling unit 1304 may generate the service quality estimation model approximated to a straight line 2010 by using a record including input data existing in the vicinity of the data 2001 and corresponding to coordinates 2002 to 2004.

Thus, the service quality modeling unit 1304 may generate a local service quality estimation model that represents, with relatively high accuracy, a relationship among the usage amount of infrastructure resource, the use amount of service, and the quality value of the service in the vicinity of the data 2001. Therefore, the service quality modeling unit 1304 may accurately acquire a prediction value of the quality value of the service.

(Example in which Determination Apparatus 100 Calculates Weighting Coefficient)

Next, an example in which the determination apparatus 100 calculates a weighting coefficient will be described with reference to FIGs. 21 to 25.

FIGs. 21 to 25 are explanatory diagrams illustrating an example in which the determination apparatus 100 calculates a weighting coefficient. In the example illustrated in FIGs. 21 to 25, the business processing system 200 includes a server AP01 and a server DB01 as the business processing apparatuses 201.

An index value of a resources is a CPU use rate or a disk IO. The index value is normalized between 0 and 1. A sampling interval for the index value are, for example, an hour. The number of times of sampling per day is 24. The service determination unit 1301 acquires operation data corresponding to 90 days from January 1, 2018 to March 31, 2018 and stores the acquired operation data in the operation table 400. Description continues with reference to FIG. 21, and a variation tendency of an index value for each resource in operation data will be described. The operation data has periodicity for each day of week.

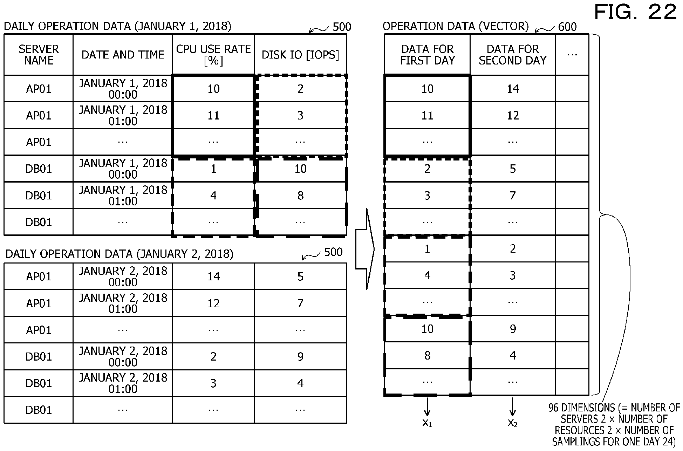

In FIG. 21, the service determination unit 1301 separates the operation data stored in the operation table 400 into single-day data so as to generate daily operation data. For example, the service determination unit 1301 generates daily operation data having a date of "20180101", daily operation data having a date "20180102", and the like and stores the daily operation data by using the daily table 500. Next, description continues with reference to FIG. 22.

In FIG. 22, the service determination unit 1301 vectorizes daily operation data. For example, the service determination unit 1301 arranges one or a plurality of index values indicated by the daily operation data stored in the daily table 500 to vectorize the daily operation data as elements according to a predetermined rule, and stores the vectorized daily operation data by using the vector table 600.

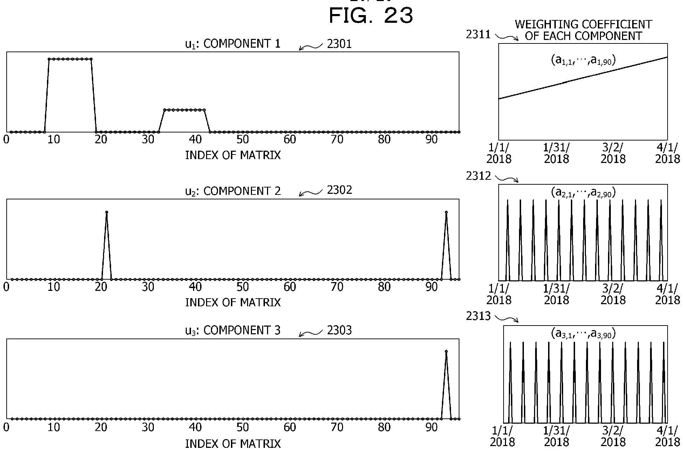

For example, daily operation data having a date of "20180101" is stored in the vector table 600 as a vector $x_1$. For example, daily operation data having a date of "20180102" is stored in the vector table 600 as a vector $x_2$. The vector is 96 dimensional. Next, description continues with reference to FIG. 23.

In FIG. 23, the service determination unit 1301 refers to the vector table 600 and generates an operation data matrix $X = (x_1, x_2, ..., \text{and } x_{90})$ in which vectors $x_1, x_2, ..., \text{and } x_{90}$ corresponding to respective 90 days are set as columns. The operation data matrix X is a $96 \times 90$ matrix. The service determination unit 1301 executes nonnegative matrix factorization on the operation data matrix X by using the following equation (4) to generate a basis matrix U and a weight matrix A.

For example, the service determination unit 1301 estimates the weight A and the basis U that minimize the following equation (4). $||z||_{FRO}$ is a Frobenius norm. The terms $\alpha||A||_1$ and $\beta||U||_1$ are sparseness constraints. It is assumed that, in the following equation (4), $\alpha = \beta = 0.01$.

$$(A^*, U^*) = argmin_{A,U} (1/2||X\text{-}UA||_{FRO}^2) + \alpha||A||_1 + \beta||U||_1 \ ... \ (4)$$

At this time, the service determination unit 1301, which presets the basis number = 3, defines the basis matrix $U = (u_1, u_2, \text{and } u_3)$. The basis matrix U is a $96 \times 3$ matrix. The service determination unit 1301 defines the weight matrix $A = (a_1, a_2, \text{and } a_3) = (a_{ij})$. The weight matrix A is a $3 \times 90$ matrix.

As a result, the service determination unit 1301 generates the basis matrix U including the basis vectors $u_1$, $u_2$, and $u_3$ as illustrated in graphs 2301 to 2303. The service determination unit 1301 generates the weight matrix A including weight vectors $a_1$, $a_2$, and $a_3$ as illustrated in graphs 2311 to 2313. The weight vector $a_1 = (a_{1,1}, ..., \text{and } a_{1,90})$. The weight vector $a_2 = (a_{2,1}, ..., \text{and } a_{2,90})$. The weight vector $a_3 = (a_{3,1}, ..., \text{and } a_{3,90})$.

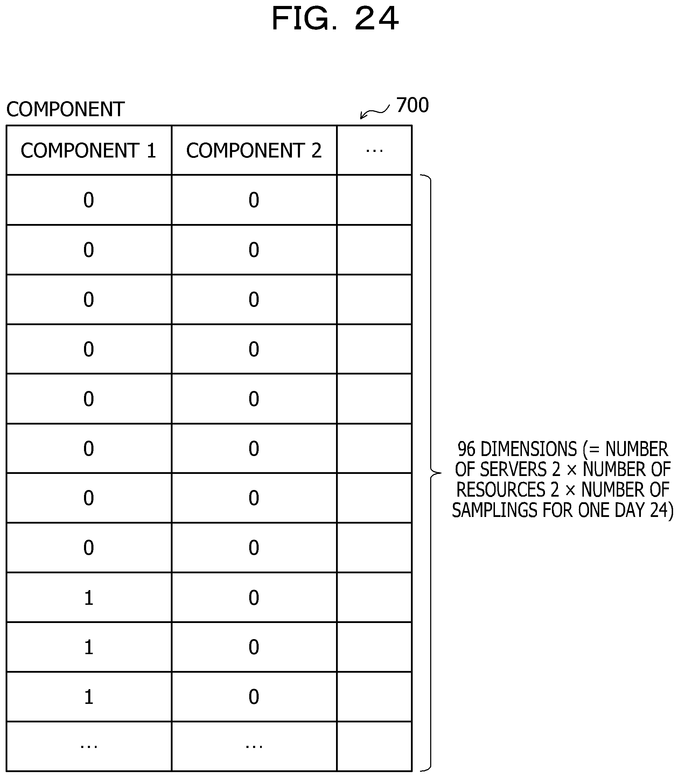

Although the basis number is preset according to the above description, the description is not limited thereto. For example, the number of dimensions of the vectors forming the operation data matrix may be used as the basis number. In this case, according to the terms $\alpha||A||_1$ and $\beta||U||_1$ in the above equation (4), the weighting coefficient applied to the basis vector which is not preferable as component data of a business process unit tends to become zero. Thus, the service determination unit 1301 excludes the basis vector $u_i$ corresponding to the weight vector $a_i$ for which a sum of the weighting coefficients is zero. Accordingly, the service determination unit 1301 may accurately generate the basis matrix U. Next, description continues with reference to FIG. 24.

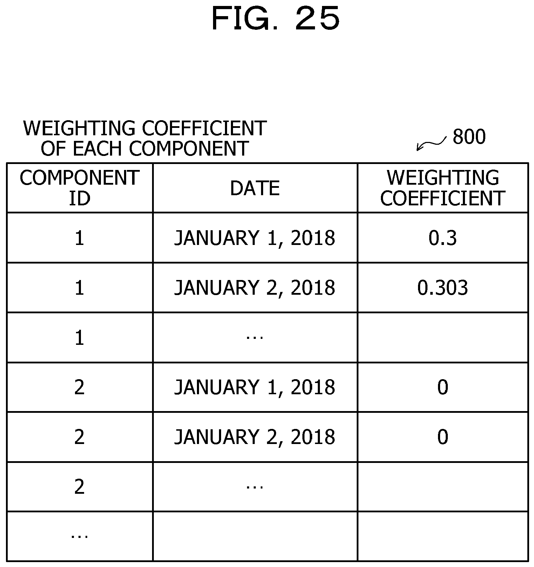

In FIG. 24, the service determination unit 1301 stores the basis vector of the generated basis matrix by using the component table 700. In the same manner as the vector forming the operation data matrix, the basis vector is 96 dimensional. Next, description continues with reference to FIG. 25.

In FIG. 25, the service determination unit 1301 stores the weight vector of the generated weight matrix by using the weight table 800. Corresponding to the number of days, the weight vector is 90 dimensional. Thus, the service determination unit 1301 may acquire the weighting coefficient corresponding to the use amount of service. Therefore, even in a status where it is difficult to directly measure the use amount of each service, the service determination unit 1301 may determine whether or not an alarm is to be output.

Although the case where the determination apparatus 100 calculates the weighting coefficient for each day is described, the embodiment is not limited thereto. For example, the service determination unit 1301 may calculate a weighting coefficient for another predetermined interval unit. For example, the service determination unit 1301 may calculate the weighting coefficient in units of 30 minutes.

(Entire Process Procedure)

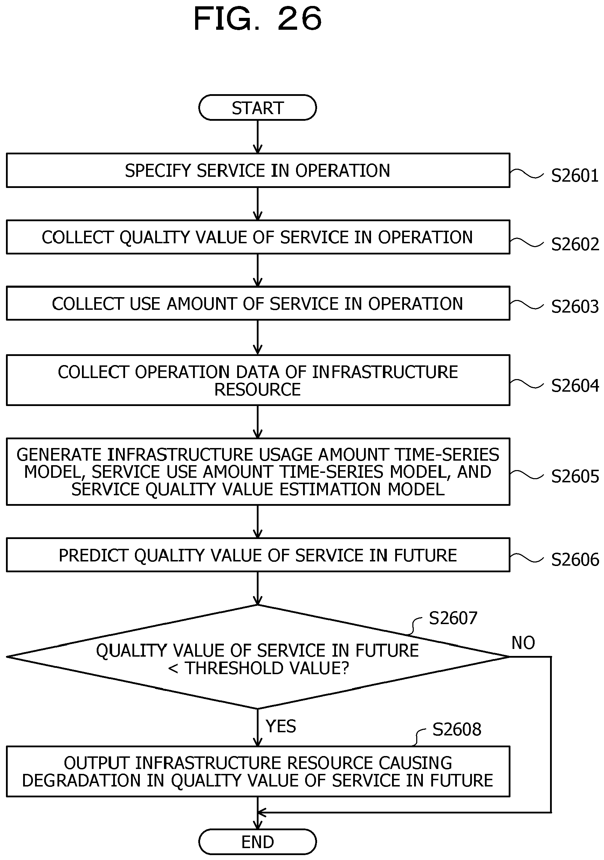

Next, an example of an entire process procedure to be executed by the determination apparatus 100 will be described with reference to FIG. 26. The entire process is implemented, for example, by the CPU 301, the storage area such as the memory 302 and the recording medium 305, and the network I/F 303 illustrated in FIG. 3.

FIG. 26 is a flowchart illustrating an example of the entire process procedure. The determination apparatus 100 specifies a service in operation (step S2601). Next, the determination apparatus 100 collects a quality value of the service in operation (step S2602). The determination apparatus 100 collects the use amount of services in operation (step S2603).

Next, the determination apparatus 100 collects operation data of an infrastructure resource (step S2604). The determination apparatus 100 generates an infrastructure usage amount time-series model, a service use amount time-series model, and a service quality value estimation model (step S2605).

Next, the determination apparatus 100 predicts a quality value of the service in future (step S2606). For example, the determination apparatus 100 estimates the usage amount of infrastructure resource in future and the use amount of service in future by using the infrastructure usage amount time-series model and the service use amount time-series model. For example, the determination apparatus 100 estimates a quality value of the service in future corresponding to a combination of the estimated usage amount of infrastructure resource in future and the estimated use amount of service in future by using the service quality value estimation model.

The determination apparatus 100 determines whether or not the quality value of the service in future < a threshold value (step S2607). When the quality value of the service in future < the threshold value is not satisfied (No in step S2607), the determination apparatus 100 ends the entire process. On the other hand, when the quality value of the service in future < the threshold value (Yes in step S2607), the determination apparatus 100 proceeds to the process in step S2608.

In step S2608, the determination apparatus 100 outputs an infrastructure resource that causes a decrease in quality value of the service in future (step S2608). The determination apparatus 100 ends the entire process. Thus, the determination apparatus 100 enables the system administrator to recognize whether or not the quality of the service is to be degraded in future.

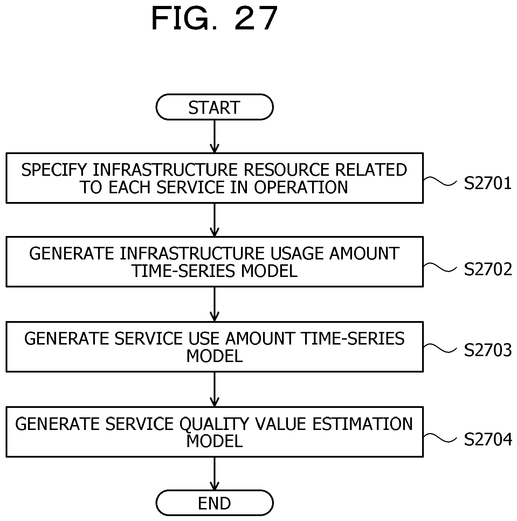

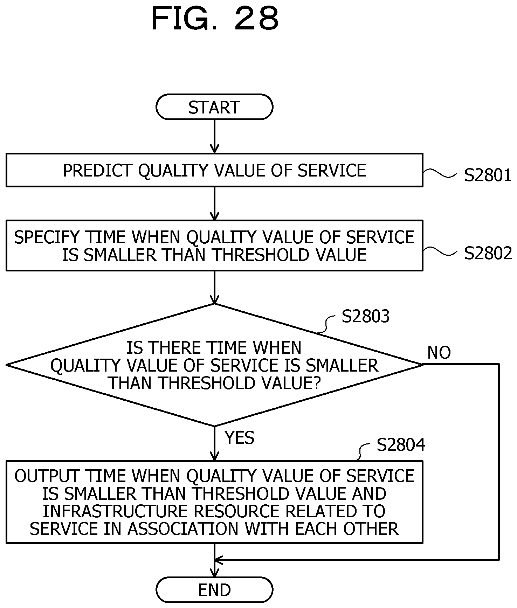

For example, the determination apparatus 100 may execute a model generation process, which will be described below in FIG. 27, as the process in step S2605. As the processes in steps S2606 to S2608, the determination apparatus 100 may, for example, execute an analysis process, which will be described below with reference to FIG. 28.

(Model Generation Process Procedure)

Next, an example of a model generation process procedure executed by the determination apparatus 100 will be described with reference to FIG. 27. The model generation process is implemented, for example, by the CPU 301, the storage area such as the memory 302 and the recording medium 305, and the network I/F 303 illustrated in FIG. 3.

FIG. 27 is a flowchart illustrating an example of a model generation process procedure. The determination apparatus 100 specifies an infrastructure resource related to each service in operation (step S2701). The determination apparatus 100 generates an infrastructure usage amount time-series model based on the usage amount of specified infrastructure resource, among operation data of the infrastructure resource (step S2702).

Next, the determination apparatus 100 generates a service use amount time-series model based on the use amount of service (step S2703). The determination apparatus 100 generates a service quality value estimation model based on the usage amount of specified infrastructure resource, the use amount of service, and a quality value of the service (step S2704). After that, the determination apparatus 100 ends the model generation process. Thus, the determination apparatus 100 may generate various models.

(Analysis Process Procedure)

Next, an example of an analysis process procedure executed by the determination apparatus 100 will be described with reference to FIG. 28. The analysis process is implemented, for example, by the CPU 301, the storage area such as the memory 302 and the recording medium 305, and the network I/F 303 illustrated in FIG. 3.

FIG. 28 is a flowchart illustrating an example of an analysis process procedure. In FIG. 28, the determination apparatus 100 predicts a quality value of a service (step S2801). Next, the determination apparatus 100 specifies a time when the quality value of the service is smaller than a threshold value (step S2802).

The determination apparatus 100 determines whether or not there is a time when the quality value of the service is smaller than the threshold value (step S2803). When there is no time when the quality value of the service is smaller than the threshold value (No in step S2803), the determination apparatus 100 ends the analysis process. On the other hand, when there is a time when the quality value of the service is smaller than the threshold value (Yes in step S2803), the determination apparatus 100 proceeds to the process in step S2804.

In step S2804, the determination apparatus 100 associates the time when the quality value of the service is smaller than the threshold value with the infrastructure resource related to the service and outputs the time and the infrastructure resource (step S2804). The determination apparatus 100 ends the analysis process. Thus, the determination apparatus 100 enables the system administrator to recognize whether or not the quality of the service is to be degraded in future.

As described above, according to the determination apparatus 100, it is possible to acquire the usage amount of resource related to a predetermined service at one or more time points. According to the determination apparatus 100, it is possible to acquire the use amount of service at one or more time points. According to the determination apparatus 100, it is possible to acquire a quality value of the service associated with the usage amount of resource and the use amount of service in at least one past time point. According to the determination apparatus 100, it is possible to specify, by using the first model, the usage amount of resource at any time point in future predicted from the acquired usage amounts of resource at one or more time points. According to the determination apparatus 100, it is possible to specify, by using the second model, the use amount of service at any time point in future predicted from the acquired use amounts of service at one or more time points. According to the determination apparatus 100, it is possible to determine, based on the acquired quality value of the service, the usage amount of specified resource, and the use amount of specified service, whether or not to output an alarm related to the service. Thus, the determination apparatus 100 may determine whether or not to output the alarm based on whether or not the quality of the service will be degraded in future.

According to the determination apparatus 100, it is possible to generate the third model based on the acquired quality value of the service at any past time point. According to the determination apparatus 100, it is possible to specify, by using the generated third model, the quality value of the service predicted from the usage amount of specified resource and the use amount of specified service. According to the determination apparatus 100, it is possible to determine, based on the specified quality value of the service, whether or not to output an alarm related to the service. Thus, the determination apparatus 100 may accurately estimate the quality value in future, and may accurately determine whether or not the quality of the service will be degraded in future.

According to the determination apparatus 100, it is possible to acquire a quality value of the service associated with the usage amount of resource approximated to the usage amount of specified resource and the use amount of service approximated to the use amount of specified service at any past time point. Thus, the determination apparatus 100 may generate the third model by which a quality value in future may be estimated with high accuracy.

According to the determination apparatus 100, it is possible to acquire the usage amounts of resource at a plurality of time points. According to the determination apparatus 100, it is possible to acquire the use amounts of service at a plurality of time points. According to the determination apparatus 100, it is possible to generate the first model based on the acquired usage amounts of resource at the plurality of time points. According to the determination apparatus 100, it is possible to generate the second model based on the acquired use amounts of service at the plurality of time points. Thus, the determination apparatus 100 allows the system administrator not to prepare the first model and the second model, and reduce an operation load on the system administrator.

When the specified quality value of the service is less than a threshold value, the determination apparatus 100 may determine to output an alarm related to the service. Thus, the determination apparatus 100 may easily determine whether or not the quality of the service will be degraded in future, based on the threshold value determination.

According to the determination apparatus 100, the alarm may include information indicating a cause for a decrease in quality value of the service. Thus, the determination apparatus 100 enables the system administrator to easily handle the cause of the decrease in quality value of the service, and may reduce the operation load on the system administrator.

According to the determination apparatus 100, it is possible to output an alarm in a case where it is determined that the alarm is output. Thus, the determination apparatus 100 enables the system administrator to recognize whether or not the quality of the service is to be degraded in future.

A determination method described in the present embodiment may be realized by executing a previously prepared program with a computer such as a PC or a workstation. A determination program described in the present embodiment is recorded in a computer-readable recording medium and is executed by being read from the recording medium by a computer. The recording medium is a hard disc, a flexible disc, a compact disc (CD) - ROM, a magneto optical disc (MO), a digital versatile disc (DVD), or the like. The determination program described in the present embodiment may be distributed via a network, such as the Internet.

## Claims

1. A determination method executed by a computer, the method comprising:

   acquiring service usage and resource usage related to a predetermined service;
   acquiring a quality value of the predetermined service by using the resource usage and the service usage;
   identifying the resource usage in future by using a first model and the resource usage, the first model outputting a usage amount of a resource at any time point in future;
   identifying the resource usage in future by using a second model and the service usage, the second model outputting a use amount of a service at any time point in future; and
   determining whether to output an alarm related to the predetermined service based on the quality value, the resource usage in future, and the resource usage in future.

2. The determination method according to claim 1, further comprising:

   generating a third model that outputs the quality value of the service related to the resource usage and the service usage, based on the acquired quality value of the service at any past time point; and
   identifying the quality value of the service predicted from the resource usage and the service usage by using the generated third model,
   wherein the determining includes determining whether or not to output the alarm related to the service is determined based on the specified quality value of the service.

3. The determination method according to claim 1, wherein
   the acquiring the quality value of the service includes acquiring the quality value of the service associated with the usage amount of the resource approximated to the resource usage and the use amount of the service approximated to the service usage at any past time point.

4. The determination method according to claim 1, further comprising:

acquiring the resource usage at a plurality of time points;
acquiring the service usage at the plurality of time points;
generating the first model based on the resource usage at the plurality of time points; and
generating the second model based on the service usage at the plurality of time points.

5. The determination method according to claim 1, wherein
the determining includes outputting the alarm related to the service when the quality value of the service is less than a threshold value.

6. The determination method according to claim 1, wherein
the alarm includes information indicating a cause of a decrease in quality value of the service.

7. A determination program that causes a computer to execute a process, the process comprising:

acquiring service usage and resource usage related to a predetermined service;
acquiring a quality value of the predetermined service by using the resource usage and the service usage;
identifying the resource usage in future by using a first model and the resource usage, the first model outputting a usage amount of a resource at any time point in future;
identifying the resource usage in future by using a second model and the service usage, the second model outputting a use amount of a service at any time point in future; and
determining whether to output an alarm related to the predetermined service based on the quality value, the resource usage in future, and the resource usage in future.

8. The determination program according to claim 7, further comprising:

generating a third model that outputs the quality value of the service related to the resource usage and the service usage, based on the acquired quality value of the service at any past time point; and
identifying the quality value of the service predicted from the resource usage and the service usage by using the generated third model,
wherein the determining includes determining whether or not to output the alarm related to the service is determined based on the specified quality value of the service.

9. The determination program according to claim 7, wherein
the acquiring the quality value of the service includes acquiring the quality value of the service associated with the usage amount of the resource approximated to the resource usage and the use amount of the service approximated to the service usage at any past time point.

10. The determination program according to claim 7, further comprising:

acquiring the resource usage at a plurality of time points;
acquiring the service usage at the plurality of time points;
generating the first model based on the resource usage at the plurality of time points; and
generating the second model based on the service usage at the plurality of time points.

11. the determination program according to claim 7, wherein the determining includes outputting the alarm related to the service when the quality value of the service is less than a threshold value.

12. The determination program according to claim 7, wherein the alarm includes information indicating a cause of a decrease in quality value of the service.

# FIG. 1

# FIG. 2

# FIG. 3

100

301

CPU

302

MEMORY

300

303

NETWORK I/F

304

RECORDING MEDIUM I/F

305

RECORDING MEDIUM

210

NETWORK

# FIG. 4

RESOURCE 400

| SERVER NAME | DATE AND TIME | CPU USE RATE (%) | DISK IO (IOPS) | · · · |
|---|---|---|---|---|
| AP01 | JANUARY-1-2019 00 : 00 : 00 | 10 | 2 | |
| AP01 | JANUARY-1-2019 00 : 00 : 30 | 10 | 3 | |
| AP01 | JANUARY-1-2019 00 : 01 : 00 | 18 | 14 | |
| AP01 | JANUARY-1-2019 00 : 01 : 30 | 22 | 30 | |
| AP01 | JANUARY-1-2019 00 : 02 : 00 | 29 | 33 | |
| AP01 | JANUARY-1-2019 00 : 02 : 30 | 38 | 49 | |
| AP01 | JANUARY-1-2019 00 : 03 : 00 | 35 | 35 | |
| AP01 | JANUARY-1-2019 00 : 03 : 30 | 26 | 22 | |
| AP01 | JANUARY-1-2019 00 : 04 : 00 | 69 | 50 | |
| AP01 | JANUARY-1-2019 00 : 04 : 30 | 13 | 9 | |
| AP01 | JANUARY-1-2019 00 : 05 : 00 | 10 | 4 | |
| AP01 | JANUARY-1-2019 00 : 05 : 30 | 11 | 2 | |
| · · · | | | | |

400-1

# FIG. 5

DAILY OPERATION DATA

RESOURCE

500

| SERVER NAME | DATE AND TIME | CPU USE RATE [%] | DISK IO [IOPS] | ... |
|---|---|---|---|---|
| AP01 | JANUARY 1, 2018 00:00 | 10 | 2 | |
| AP01 | JANUARY 1, 2018 01:00 | 11 | 3 | |
| AP01 | ... | ... | ... | |
| DB01 | JANUARY 1, 2018 00:00 | 1 | 10 | |
| DB01 | JANUARY 1, 2018 01:00 | 4 | 8 | |
| DB01 | ... | ... | ... | |

500-1

# FIG. 6

600

OPERATION DATA (VECTOR)

| OPERATION DATA FOR FIRST DAY | OPERATION DATA FOR SECOND DAY | ... |
|---|---|---|
| 10 | 14 | |
| 11 | 12 | |
| ... | ... | |
| 2 | 5 | |
| 3 | 7 | |
| ... | ... | |
| 1 | 2 | |
| 4 | 3 | |
| ... | ... | |
| 10 | 9 | |
| 8 | 4 | |
| ... | ... | |

600-1          600-2  · · ·

# FIG. 7

700

COMPONENT

| COMPONENT 1 | COMPONENT 2 | ··· |
|:-----------:|:-----------:|:---:|
| 0 | 0 | |
| 0 | 0 | |
| 0 | 0 | |
| 0 | 0 | |
| 0 | 0 | |
| 0 | 0 | |
| 0 | 0 | |
| 0 | 0 | |
| 1 | 0 | |
| 1 | 0 | |
| 1 | 0 | |
| ··· | ··· | |

700-1                    700-2     · · ·

# FIG. 8

800

WEIGHTING COEFFICIENT
OF EACH COMPONENT

| COMPONENT ID | DATE | WEIGHTING COEFFICIENT |
|---|---|---|
| 1 | JANUARY 1, 2018 | 0.3 |
| 1 | JANUARY 2, 2018 | 0.303 |
| 1 | ... | |
| 2 | JANUARY 1, 2018 | 0 |
| 2 | JANUARY 2, 2018 | 0 |
| 2 | ... | |
| ... | | |

800-1

# FIG. 9

900

| SERVICE NAME | DATE AND TIME | SERVICE USE AMOUNT (NUMBER OF ACCESSES) |
|---|---|---|
| order | JANUARY-1-2019 00 : 00 : 00 | 1 |
| order | JANUARY-1-2019 00 : 00 : 30 | 2 |
| order | JANUARY-1-2019 00 : 01 : 00 | 10 |
| order | JANUARY-1-2019 00 : 01 : 30 | 14 |
| order | JANUARY-1-2019 00 : 02 : 00 | 21 |
| order | JANUARY-1-2019 00 : 02 : 30 | 132 |
| order | JANUARY-1-2019 00 : 03 : 00 | 80 |
| order | JANUARY-1-2019 00 : 03 : 30 | 71 |
| order | JANUARY-1-2019 00 : 04 : 00 | 65 |
| order | JANUARY-1-2019 00 : 04 : 30 | 33 |
| order | JANUARY-1-2019 00 : 05 : 00 | 10 |
| order | JANUARY-1-2019 00 : 05 : 30 | 5 |
| . . . | | |

900-1

# FIG. 10

1000

| SERVICE NAME | DATE AND TIME | SERVICE QUALITY |
|---|---|---|
| order | JANUARY-1-2019 00 : 00 : 00 | 1 |
| order | JANUARY-1-2019 00 : 00 : 30 | 1 |
| order | JANUARY-1-2019 00 : 01 : 00 | 2 |
| order | JANUARY-1-2019 00 : 01 : 30 | 2 |
| order | JANUARY-1-2019 00 : 02 : 00 | 3 |
| order | JANUARY-1-2019 00 : 02 : 30 | 10 |
| order | JANUARY-1-2019 00 : 03 : 00 | 4 |
| order | JANUARY-1-2019 00 : 03 : 30 | 4 |
| order | JANUARY-1-2019 00 : 04 : 00 | 10 |
| order | JANUARY-1-2019 00 : 04 : 30 | 3 |
| order | JANUARY-1-2019 00 : 05 : 00 | 2 |
| order | JANUARY-1-2019 00 : 05 : 30 | 1 |
| . . . | | |

1000-1

FIG. 11

FIG. 12

100

1200
STORAGE UNIT

1201
ACQUISITION UNIT

1203
FIRST SPECIFYING UNIT

1204
SECOND SPECIFYING UNIT

1205
DETERMINATION UNIT

1206
OUTPUT UNIT

1202
GENERATION UNIT

FIG. 13

SERVICE 1

SERVICE n

VIRTUAL ENVIRONMENT

PHYSICAL ENVIRONMENT

PHYSICAL ENVIRONMENT

1301

SERVICE DETERMINATION UNIT

1302

SERVICE PERFORMANCE MONITORING UNIT

1303

INFRASTRUCTURE MONITORING UNIT

1304

SERVICE QUALITY MODELING UNIT

1305

SERVICE QUALITY PREDICTION UNIT

1306

INFRASTRUCTURE CONTROL UNIT

# FIG. 14

INFRASTRUCTURE RESOURCE USAGE AMOUNT

1410

1411

TIME-SERIES ESTIMATION MODEL

OBSERVATION VALUE

TIME

1431

SERVICE USE AMOUNT

OBSERVATION VALUE

1421

1420

TIME-SERIES ESTIMATION MODEL

SERVICE QUALITY ESTIMATION MODEL

SERVICE USE AMOUNT

OBSERVATION VALUE

1430

1432

# FIG. 15

1500

| DATE AND TIME | CPU USE RATE (%) OF SERVER AP1 | DISK IO (IOPS) OF SERVER AP1 | CPU USE RATE (%) OF SERVER AP2 | DISK IO (IOPS) OF SERVER AP2 | ... |
|---|---|---|---|---|---|
| JANUARY-1-2019 00:00:00 | 10 | 2 | 10 | 2 | |
| JANUARY-1-2019 00:00:30 | 10 | 3 | 10 | 3 | |
| JANUARY-1-2019 00:01:00 | 18 | 14 | 18 | 14 | |
| JANUARY-1-2019 00:01:30 | 22 | 30 | 22 | 30 | |
| JANUARY-1-2019 00:02:00 | 29 | 33 | 29 | 33 | |
| JANUARY-1-2019 00:02:30 | 38 | 49 | 38 | 49 | |

$t$   $y_{1,t}$   $y_{2,t}$   $y_{3,t}$   $y_{4,t}$

$p, \mathbf{c}, \boldsymbol{\varphi}_i, \sigma_i$

# FIG. 16

1600

t

$y_t$

| SERVICE NAME | DATE AND TIME | SERVICE USE AMOUNT (NUMBER OF ACCESSES) |
|---|---|---|
| order | JANUARY-1-2019 00 : 00 : 00 | 1 |
| order | JANUARY-1-2019 00 : 00 : 30 | 2 |
| order | JANUARY-1-2019 00 : 01 : 00 | 10 |
| order | JANUARY-1-2019 00 : 01 : 30 | 14 |
| order | JANUARY-1-2019 00 : 02 : 00 | 21 |
| order | JANUARY-1-2019 00 : 02 : 30 | 30 |

$\Rightarrow$ p, q, c, $\varphi_i$, $\theta_i$, $\sigma$

FIG. 17

1700

| DATE AND TIME | SERVER NAME | CPU USE RATE (%) | DISK IO (IOPS) | SERVER NAME | CPU USE RATE (%) | DISK IO (IOPS) | SERVICE NAME | SERVICE USE AMOUNT (NUMBER OF ACCESSES) | SERVICE QUALITY |
|---|---|---|---|---|---|---|---|---|---|
| JANUARY-1-2019 00:00:00 | AP01 | 10 | 2 | AP02 | 30 | 2 | order | 1 | 100 |
| JANUARY-1-2019 00:00:30 | AP01 | 10 | 3 | AP02 | 10 | 3 | order | 2 | 100 |
| JANUARY-1-2019 00:01:00 | AP01 | 18 | 14 | AP02 | 18 | 14 | order | 10 | 95 |
| JANUARY-1-2019 00:01:30 | AP01 | 22 | 30 | AP02 | 22 | 30 | order | 14 | 90 |
| JANUARY-1-2019 00:02:00 | AP01 | 29 | 33 | AP02 | 29 | 33 | order | 21 | 80 |
| JANUARY-1-2019 00:02:30 | AP01 | 38 | 49 | AP02 | 38 | 49 | order | 30 | 60 |

ESTIMATE b AND $a_m$ AND CALCULATE $\hat{y}$

# FIG. 18

INFRASTRUCTURE RESOURCE
USAGE AMOUNT

1410

TIME

1800

SERVICE USE AMOUNT

1420

1430

SERVICE QUALITY

THRESHOLD
VALUE

PREDICTION
VALUE

OBSERVATION
RANGE

PREDICTION
RANGE

SERVICE
DEGRADATION TIME

CURRENT TIME POINT

## FIG. 19

| | DATE AND TIME | SERVER NAME | CPU USE RATE (%) | DISK IO (IOPS) | SERVER NAME | CPU USE RATE (%) | DISK IO (IOPS) | SERVICE NAME | SERVICE USE AMOUNT (NUMBER OF ACCESSES) | | SERVICE QUALITY |
|---|---|---|---|---|---|---|---|---|---|---|---|
| ACQUIRED | JANUARY-1-2019 00:00:00 | AP01 | 10 | 2 | AP02 | 30 | 2 | order | 1 | | 100 |
| | JANUARY-1-2019 00:00:30 | AP01 | 10 | 3 | AP02 | 10 | 3 | order | 2 | | 100 |
| | JANUARY-1-2019 00:01:00 | AP01 | 18 | 14 | AP02 | 18 | 14 | order | 10 | | 95 |
| | JANUARY-1-2019 00:01:30 | AP01 | 22 | 30 | AP02 | 22 | 30 | order | 14 | | 90 |
| | JANUARY-1-2019 00:02:00 | AP01 | 29 | 33 | AP02 | 29 | 33 | order | 21 | | 80 |
| | JANUARY-1-2019 00:02:30 | AP01 | 38 | 49 | AP02 | 38 | 49 | order | 30 | | 60 |
| PREDICTION | JANUARY-1-2019 00:03:00 | AP01 | 20 | 30 | AP02 | 20 | 30 | order | 40 | | 50 |
| | JANUARY-1-2019 00:03:30 | AP01 | 10 | 15 | AP02 | 10 | 15 | order | 50 | | 40 |
| | JANUARY-1-2019 00:04:00 | AP01 | 1 | 3 | AP02 | 1 | 3 | order | 60 | | 30 |

1900
1910 1920
1911
1921
1931
1932
1933
1942
1943
1941

# FIG. 20

# FIG. 21

400

OPERATION DATA

| SERVER NAME | DATE AND TIME | CPU USE RATE [%] | DISK IO [IOPS] |
|---|---|---|---|
| AP01 | JANUARY 1, 2018 00:00 | 10 | 2 |
| AP01 | JANUARY 1, 2018 01:00 | 11 | 3 |
| AP01 | ... | ... | ... |
| DB01 | JANUARY 1, 2018 00:00 | 1 | 10 |
| DB01 | JANUARY 1, 2018 01:00 | 4 | 8 |
| DB01 | ... | ... | ... |
| AP01 | JANUARY 2, 2018 00:00 | 14 | 5 |
| AP01 | JANUARY 2, 2018 01:00 | 12 | 7 |
| AP01 | ... | ... | ... |
| DB01 | JANUARY 2, 2018 00:00 | 2 | 9 |
| DB01 | JANUARY 2, 2018 01:00 | 3 | 4 |
| DB01 | ... | ... | ... |

⇨ DAILY OPERATION DATA ON JANUARY 1, 2018

⇨ DAILY OPERATION DATA ON JANUARY 2, 2018

FIG. 22

DAILY OPERATION DATA (JANUARY 1, 2018) ~500

| SERVER NAME | DATE AND TIME | CPU USE RATE [%] | DISK IO [IOPS] |
|---|---|---|---|
| AP01 | JANUARY 1, 2018 00:00 | 10 | 2 |
| AP01 | JANUARY 1, 2018 01:00 | 11 | 3 |
| AP01 | ... | ... | ... |
| DB01 | JANUARY 1, 2018 00:00 | 1 | 10 |
| DB01 | JANUARY 1, 2018 01:00 | 4 | 8 |
| DB01 | ... | ... | ... |

DAILY OPERATION DATA (JANUARY 2, 2018) ~500

| AP01 | JANUARY 2, 2018 00:00 | 14 | 5 |
|---|---|---|---|
| AP01 | JANUARY 2, 2018 01:00 | 12 | 7 |
| AP01 | ... | ... | ... |
| DB01 | JANUARY 2, 2018 00:00 | 2 | 9 |
| DB01 | JANUARY 2, 2018 01:00 | 3 | 4 |
| DB01 | ... | ... | ... |

OPERATION DATA (VECTOR) ~600

| DATA FOR FIRST DAY | DATA FOR SECOND DAY | ... |
|---|---|---|
| 10 | 14 | |
| 11 | 12 | |
| ... | ... | |
| 2 | 5 | |
| 3 | 7 | |
| ... | ... | |
| 1 | 2 | |
| 4 | 3 | |
| ... | ... | |
| 10 | 9 | |
| 8 | 4 | |
| ... | ... | |

$x_1$  $x_2$

96 DIMENSIONS (= NUMBER OF SERVERS 2 × NUMBER OF RESOURCES 2 × NUMBER OF SAMPLINGS FOR ONE DAY 24)

# FIG. 23

$u_1$: COMPONENT 1    2301

INDEX OF MATRIX

$u_2$: COMPONENT 2    2302

INDEX OF MATRIX

$u_3$: COMPONENT 3    2303

INDEX OF MATRIX

2311  WEIGHTING COEFFICIENT OF EACH COMPONENT

$(a_{1,1}, \cdots, a_{1,90})$

1/1/ 2018    1/31/ 2018    3/2/ 2018    4/1/ 2018

2312

$(a_{2,1}, \cdots, a_{2,90})$

1/1/ 2018    1/31/ 2018    3/2/ 2018    4/1/ 2018

2313

$(a_{3,1}, \cdots, a_{3,90})$

1/1/ 2018    1/31/ 2018    3/2/ 2018    4/1/ 2018

# FIG. 24

COMPONENT

~ 700

| COMPONENT 1 | COMPONENT 2 | ... |
|:-----------:|:-----------:|:---:|
| 0 | 0 | |
| 0 | 0 | |
| 0 | 0 | |
| 0 | 0 | |
| 0 | 0 | |
| 0 | 0 | |
| 0 | 0 | |
| 0 | 0 | |
| 1 | 0 | |
| 1 | 0 | |
| 1 | 0 | |
| ... | ... | |

96 DIMENSIONS (= NUMBER OF SERVERS 2 × NUMBER OF RESOURCES 2 × NUMBER OF SAMPLINGS FOR ONE DAY 24)

# FIG. 25

WEIGHTING COEFFICIENT
OF EACH COMPONENT  ⟋ 800

| COMPONENT ID | DATE | WEIGHTING COEFFICIENT |
|---|---|---|
| 1 | JANUARY 1, 2018 | 0.3 |
| 1 | JANUARY 2, 2018 | 0.303 |
| 1 | … | |
| 2 | JANUARY 1, 2018 | 0 |
| 2 | JANUARY 2, 2018 | 0 |
| 2 | … | |
| … | | |

# FIG. 26

```
         ( START )
             │
             ▼
┌──────────────────────────────────────┐
│      SPECIFY SERVICE IN OPERATION     │── S2601
└──────────────────────────────────────┘
             │
             ▼
┌──────────────────────────────────────┐
│ COLLECT QUALITY VALUE OF SERVICE IN   │── S2602
│              OPERATION                │
└──────────────────────────────────────┘
             │
             ▼
┌──────────────────────────────────────┐
│  COLLECT USE AMOUNT OF SERVICE IN     │── S2603
│             OPERATION                 │
└──────────────────────────────────────┘
             │
             ▼
┌──────────────────────────────────────┐
│ COLLECT OPERATION DATA OF             │── S2604
│ INFRASTRUCTURE RESOURCE               │
└──────────────────────────────────────┘
             │
             ▼
┌──────────────────────────────────────┐
│ GENERATE INFRASTRUCTURE USAGE AMOUNT  │── S2605
│ TIME-SERIES MODEL, SERVICE USE AMOUNT │
│ TIME-SERIES MODEL, AND SERVICE        │
│ QUALITY VALUE ESTIMATION MODEL        │
└──────────────────────────────────────┘
             │
             ▼
┌──────────────────────────────────────┐
│ PREDICT QUALITY VALUE OF SERVICE IN   │── S2606
│             FUTURE                    │
└──────────────────────────────────────┘
             │
             ▼
         ◇ S2607
   QUALITY VALUE OF SERVICE IN FUTURE      NO
       < THRESHOLD VALUE? ──────────────────┐
             │                              │
            YES    S2608                     │
             ▼                              │
┌──────────────────────────────────────┐   │
│ OUTPUT INFRASTRUCTURE RESOURCE CAUSING│   │
│ DEGRADATION IN QUALITY VALUE OF       │   │
│ SERVICE IN FUTURE                     │   │
└──────────────────────────────────────┘   │
             │◄─────────────────────────────┘
             ▼
          ( END )
```

# FIG. 27

```
              ┌──────────────┐
              │    START     │
              └──────┬───────┘
                     │
                     ▼
  ┌──────────────────────────────────────────┐
  │ SPECIFY INFRASTRUCTURE RESOURCE RELATED   │ ⌒ S2701
  │      TO EACH SERVICE IN OPERATION         │
  └──────────────────┬───────────────────────┘
                     │
                     ▼
  ┌──────────────────────────────────────────┐
  │  GENERATE INFRASTRUCTURE USAGE AMOUNT     │ ⌒ S2702
  │          TIME-SERIES MODEL                │
  └──────────────────┬───────────────────────┘
                     │
                     ▼
  ┌──────────────────────────────────────────┐
  │  GENERATE SERVICE USE AMOUNT TIME-SERIES  │ ⌒ S2703
  │               MODEL                       │
  └──────────────────┬───────────────────────┘
                     │
                     ▼
  ┌──────────────────────────────────────────┐
  │ GENERATE SERVICE QUALITY VALUE ESTIMATION │ ⌒ S2704
  │               MODEL                       │
  └──────────────────┬───────────────────────┘
                     │
                     ▼
              ┌──────────────┐
              │     END      │
              └──────────────┘
```

# FIG. 28

```
            ( START )
                │
                ▼
┌─────────────────────────────────────────┐
│     PREDICT QUALITY VALUE OF SERVICE     │── S2801
└─────────────────────────────────────────┘
                │
                ▼
┌─────────────────────────────────────────┐
│ SPECIFY TIME WHEN QUALITY VALUE OF SERVICE│── S2802
│      IS SMALLER THAN THRESHOLD VALUE     │
└─────────────────────────────────────────┘
                │
                ▼        S2803
              ╱╲
           ╱      ╲
        ╱  IS THERE TIME WHEN  ╲       NO
      ╱ QUALITY VALUE OF SERVICE IS SMALLER ╲────────┐
        ╲   THAN THRESHOLD VALUE?  ╱                 │
           ╲                    ╱                    │
              ╲  ╱                                   │
               │ YES      S2804                      │
               ▼                                     │
┌─────────────────────────────────────────┐         │
│ OUTPUT TIME WHEN QUALITY VALUE OF SERVICE │        │
│    IS SMALLER THAN THRESHOLD VALUE AND    │        │
│   INFRASTRUCTURE RESOURCE RELATED TO      │        │
│  SERVICE IN ASSOCIATION WITH EACH OTHER   │        │
└─────────────────────────────────────────┘         │
               │                                     │
               ▼◄────────────────────────────────────┘
            ( END )
```

Europäisches
Patentamt

European
Patent Office

Office européen
des brevets

# EUROPEAN SEARCH REPORT

Application Number

EP 21 16 4860

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/110735 A1 (SAITO YUJI [JP] ET AL) 9 April 2020 (2020-04-09) * figures 1-5 * | 1-12 | INV. G06Q10/06 G06Q10/00 |
| X | WO 2016/084327 A1 (NEC CORP [JP]) 2 June 2016 (2016-06-02) * figure 1 * | 1-12 | |
| X | US 2009/216624 A1 (KATO KIYOSHI [JP]) 27 August 2009 (2009-08-27) * figure 1 * | 1-12 | |
| X | US 2017/270450 A1 (BINOTTO ALECIO PEDRO DELAZARI [BR] ET AL) 21 September 2017 (2017-09-21) * paragraphs [0058] - [0061]; figure 1 * | 1-12 | |
| X | US 2016/301624 A1 (GONZALEZ EMMANUEL B [MX] ET AL) 13 October 2016 (2016-10-13) * paragraphs [0034] - [0035], [0064] - [0066] * | 1-12 | |

TECHNICAL FIELDS
SEARCHED (IPC)

G06Q

The present search report has been drawn up for all claims

| Place of search | Date of completion of the search | Examiner |
|---|---|---|
| Munich | 15 September 2021 | Diaz Calvo, Sonia |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 21 16 4860

This annex lists the patent family members relating to the patent documents cited in the above-mentioned European search report.
The members are as contained in the European Patent Office EDP file on
The European Patent Office is in no way liable for these particulars which are merely given for the purpose of information.

15-09-2021

| Patent document cited in search report | | Publication date | Patent family member(s) | | Publication date |
|---|---|---|---|---|---|
| US 2020110735 | A1 | 09-04-2020 | JP | 2020057327 A | 09-04-2020 |
| | | | US | 2020110735 A1 | 09-04-2020 |
| WO 2016084327 | A1 | 02-06-2016 | JP | WO2016084327 A1 | 14-09-2017 |
| | | | WO | 2016084327 A1 | 02-06-2016 |
| US 2009216624 | A1 | 27-08-2009 | JP | 4872945 B2 | 08-02-2012 |
| | | | JP | 2009199534 A | 03-09-2009 |
| | | | US | 2009216624 A1 | 27-08-2009 |
| | | | US | 2012151053 A1 | 14-06-2012 |
| | | | US | 2013138594 A1 | 30-05-2013 |
| US 2017270450 | A1 | 21-09-2017 | NONE | | |
| US 2016301624 | A1 | 13-10-2016 | NONE | | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012100010 A

**Non-patent literature cited in the description**

- **HOYER, PATRIK O.** Non-negative matrix factorization with sparseness constraints. *Journal of machine learning research,* 05 November 2004, 1457-1469
- **STENMAN, A. ; GUSTAFSSON, F. ; LJUNG, L.** Just In Time Models For Dynamical Systems. *Proc. 35th Conf. Decision and Control,* December 1996, 1115, , 1120
- **SHUN USHIDA ; HIDENORI KIMURA.** Just-In-Time Approach to Nonlinear Identification and Control. *Journal of the Society of Instrument and Control Engineers,* 2005, vol. 44 (2), 102, , 106